# EUROPEAN PATENT APPLICATION

(11) **EP 4 772 976 A1**
(43) Date of publication of application: **08.07.2026**
(21) Application number: 26150057.3
(22) Date of filing: 02.01.2026
(51) Int. Cl.: G06F 3/041, G06F 3/044, G06F 3/046

(54) **ELECTRONIC DEVICE**

(30) Priority: 03.01.2025 KR 20250000719; 07.04.2025 KR 20250044917
(71) Applicant: Samsung Display Co., Ltd., Yongin-si, Gyeonggi-do (KR)
(72) Inventor: KIM, Hyungbae, Yongin-si (KR); JEON, Hyunjee, Yongin-si (KR); LIM, Sanghyun, Yongin-si (KR)
(74) Representative: Marks & Clerk LLP

(57) **Abstract**

An electronic device includes: a display layer configured to display an image; a sensor layer on the display layer; a first magnetic field induction layer under the display layer; and a second magnetic field induction layer under the display layer, and spaced from the first magnetic field induction layer. The sensor layer includes: a plurality of first electrodes along a first direction; a plurality of second electrodes along a second direction crossing the first direction; a plurality of third electrodes along the first direction; and a loop trace line electrically connected with all of the plurality of third electrodes. The first magnetic field induction layer and the second magnetic field induction layer are spaced from each other in the second direction.

## Description

### BACKGROUND

### 1. Field

Aspects of embodiments of the present disclosure relate to an electronic device having improved sensing performance.

### 2. Description of the Related Art

Multimedia electronic devices, such as a television, a mobile phone, a tablet computer, a notebook computer, a car navigation device, a game machine, and the like, include a display device for displaying an image. The electronic devices may include a sensor layer (e.g., an input sensor) capable of providing a touch-based input method that enables a user to intuitively and conveniently input information or instructions in an easy and simple manner, in addition to a general input method, such as a button, a keyboard, a mouse, or the like. The sensor layer may sense the user's touch or pressure. Further, pens for users who may be accustomed to inputting information using writing instruments for more accurate touch inputs in specific application programs (e.g., application programs for sketching or drawing) have been increasingly desired.

The above information disclosed in this Background section is for enhancement of understanding of the background of the present disclosure, and therefore, it may contain information that does not constitute prior art.

### SUMMARY

Embodiments of the present disclosure may be directed to an electronic device having improved sensing performance.

According to one or more embodiments of the present disclosure, an electronic device includes: a display layer configured to display an image; a sensor layer on the display layer; a first magnetic field induction layer under the display layer; and a second magnetic field induction layer under the display layer, and spaced from the first magnetic field induction layer. The sensor layer includes: a plurality of first electrodes along a first direction; a plurality of second electrodes along a second direction crossing the first direction; a plurality of third electrodes along the first direction; and a loop trace line electrically connected with all of the plurality of third electrodes. The first magnetic field induction layer and the second magnetic field induction layer are spaced from each other in the second direction.

In an embodiment, a gap extending in the first direction may be located between the first magnetic field induction layer and the second magnetic field induction layer. A portion of each of the plurality of third electrodes may overlap with the gap.

In an embodiment, the display layer and the sensor layer may be configured to be folded and unfolded about a folding axis extending in the first direction.

In an embodiment, a folding area overlapping with the folding axis and configured to be folded and unfolded may be defined in the display layer and the sensor layer. The first magnetic field induction layer and the second magnetic field induction layer may be spaced from each other in the folding area.

In an embodiment, a width of the folding area in the second direction may be smaller than a width of the folding area in the first direction.

In an embodiment, a portion of each of the plurality of third electrodes may overlap with the folding area.

In an embodiment, the sensor layer may further include a plurality of pads electrically connected with the plurality of third electrodes. The plurality of pads may be located along the first direction.

In an embodiment, the sensor layer may further include a plurality of trace lines electrically connected with the plurality of pads and the plurality of third electrodes. The plurality of trace lines may protrude and extend from the plurality of pads in the second direction.

In an embodiment, the electronic device may further include a sensor driver configured to drive the sensor layer. In a charging operation mode, the sensor driver may be configured to provide a first signal to one of a first end of the loop trace line, a second end of the loop trace line, or the plurality of third electrodes, and provide a second signal to another one of the first end of the loop trace line, the second end of the loop trace line, or the plurality of third electrodes.

In an embodiment, the plurality of third electrodes and the loop trace line may be configured to generate a magnetic field that may be induced in a direction from the display layer toward the sensor layer by the first magnetic field induction layer and the second magnetic field induction layer.

In an embodiment, the electronic device may further include: a first lower sheet under the first magnetic field induction layer; and a second lower sheet under the second magnetic field induction layer.

In an embodiment, a magnetic permeability of each of the first magnetic field induction layer and the second magnetic field induction layer may be higher than a magnetic permeability of each of the first lower sheet and the second lower sheet.

According to one or more embodiments of the present disclosure, an electronic device includes: a display panel including a plurality of charging electrodes along a first direction, and a line portion extending in the first direction and connected to all of the plurality of charging electrodes; a first magnetic field induction layer under the display panel; and a second magnetic field induction layer under the display panel, and spaced from the first magnetic field induction layer in a second direction crossing the first direction. A gap extending in the first direction is located between the first magnetic field induction layer and the second magnetic field induction layer, and a portion of each of the plurality of charging electrodes overlaps with the gap.

In an embodiment, the display panel may be configured to be folded and unfolded about a folding axis extending in the first direction. A folding area overlapping with the folding axis may be defined in the display panel, and may be configured to be folded and unfolded. The first magnetic field induction layer and the second magnetic field induction layer may be spaced from each other in the folding area.

In an embodiment, the electronic device may further include a sensor driver configured to, in a charging operation mode, provide a first signal to at least one of the plurality of charging electrodes, and provide a second signal to at least one other charging electrode of the plurality of charging electrodes.

In an embodiment, the electronic device may further include: a first lower sheet under the first magnetic field induction layer; and a second lower sheet under the second magnetic field induction layer. A magnetic permeability of each of the first magnetic field induction layer and the second magnetic field induction layer may be higher than a magnetic permeability of each of the first lower sheet and the second lower sheet.

According to one or more embodiments of the present disclosure, an electronic device includes: a display panel having a folding area, the folding area being configured to be folded and unfolded about a folding axis extending in a first direction; a processor configured to control an operation of the display panel; a first magnetic field induction layer under the display panel; a second magnetic field induction layer under the display panel, and spaced from the first magnetic field induction layer in a second direction crossing the first direction; and a set frame under the first magnetic field induction layer and the second magnetic field induction layer. The display panel includes a plurality of charging electrodes along a first direction, and a line portion extending in the first direction and connected to all of the plurality of charging electrodes. Each of the plurality of charging electrodes overlaps with both the first magnetic field induction layer and the second magnetic field induction layer.

In an embodiment, a magnetic permeability of each of the first magnetic field induction layer and the second magnetic field induction layer may be higher than a magnetic permeability of the set frame.

In an embodiment, a gap extending in the first direction may be located between the first magnetic field induction layer and the second magnetic field induction layer. Each of the plurality of charging electrodes may extend in the second direction, and a portion of each of the plurality of charging electrodes may overlap with the gap.

In an embodiment, the display panel may further include: a plurality of pads electrically connected with the plurality of charging electrodes, and located along the first direction; and a plurality of trace lines electrically connected with the plurality of pads and the plurality of charging electrodes. The plurality of trace lines may protrude and extend from the plurality of pads in the second direction.

However, the present disclosure is not limited to the above aspects and features, and the above and additional aspects and features will be set forth, in part, in the detailed description that follows with reference to the drawings, and in part, may be apparent therefrom, or may be learned by practicing one or more of the presented embodiments of the present disclosure.

At least some of the above and other features of the invention are set out in the claims.

### BRIEF DESCRIPTION OF THE DRAWINGS

The above and other aspects and features of the present disclosure will be more clearly understood from the following detailed description of the illustrative, nonlimiting embodiments with reference to the accompanying drawings.
FIG. 1 is a block diagram of an electronic device according to an embodiment of the present disclosure.
FIG. 2 illustrates schematic views of some electronic devices according to some embodiments of the present disclosure.
FIG. 3A is a front perspective view of an electronic device according to an embodiment of the present disclosure.
FIG. 3B is a rear perspective view of an electronic device according to an embodiment of the present disclosure.
FIG. 4A is a sectional view of an electronic device according to an embodiment of the present disclosure.
FIG. 4B is a schematic view illustrating a change in a magnetic flux of a magnetic field generated in a display panel.
FIG. 5 is a schematic sectional view of a display panel according to an embodiment of the present disclosure.
FIG. 6 is a schematic view illustrating an operation of an electronic device according to an embodiment of the present disclosure.
FIG. 7A is a sectional view of a display panel according to an embodiment of the present disclosure.
FIG. 7B is a sectional view illustrating some components of a sensor layer according to an embodiment of the present disclosure.
FIG. 8A is a plan view of a sensor layer according to an embodiment of the present disclosure.
FIG. 8B is a plan view of a sensor layer according to an embodiment of the present disclosure.
FIG. 9A is a plan view illustrating a first conductive layer of a sensing unit according to an embodiment of the present disclosure.
FIG. 9B is a plan view illustrating a second conductive layer of the sensing unit according to an embodiment of the present disclosure.
FIG. 10 is an enlarged plan view of the area AA' illustrated in FIG. 9B.
FIG. 11 is a block diagram illustrating an operation of a sensor driver according to an embodiment of the present disclosure.
FIG. 12 illustrates an operation of the sensor driver according to an embodiment of the present disclosure.
FIG. 13 is a schematic view illustrating a first mode according to an embodiment of the present disclosure
FIG. 14 is a schematic view illustrating a second mode according to an embodiment of the present disclosure.
FIG. 15A is a graph depicting a waveform of a first signal according to an embodiment of the present disclosure.
FIG. 15B is a graph depicting a waveform of a second signal according to an embodiment of the present disclosure.
FIG. 16A is a plan view illustrating some components of a sensor layer according to an embodiment of the present disclosure.
FIG. 16B is a plan view illustrating some components of a sensor layer according to a comparative example.
FIG. 17A is a schematic view illustrating a second mode according to an embodiment of the present disclosure.
FIG. 17B is a schematic view illustrating a second mode based on one sensing unit according to an embodiment of the present disclosure.
FIG. 18A illustrates graphs depicting mutual inductances for respective channels when a pen is located in an area overlapping with a gap.
FIG. 18B illustrates graphs depicting mutual inductances for respective channels when a pen is located in an area not overlapping with a gap.
FIG. 19A illustrates graphs depicting intensities of signals sensed by a sensor layer when a pen is located in an area overlapping with a gap according to an embodiment of the present disclosure.
FIG. 19B illustrates graphs depicting intensities of signals sensed by a sensor layer when a pen is located in an area overlapping with a gap according to a comparative example.
FIG. 20A illustrates a graph depicting an intensity of a signal sensed by a sensor layer when a pen is located in an area not overlapping with a gap according to an embodiment of the present disclosure.
FIG. 20B illustrates a graph depicting an intensity of a signal sensed by a sensor layer when a pen is located in an area not overlapping with a gap according to a comparative example.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

Further, as would be understood by a person having ordinary skill in the art, in view of the present disclosure in its entirety, each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner, unless otherwise stated or implied.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

Further, it should be expected that the shapes shown in the figures may vary in practice depending, for example, on tolerances and/or manufacturing techniques. Accordingly, the embodiments of the present disclosure should not be construed as being limited to the specific shapes shown in the figures, and should be construed considering changes in shapes that may occur, for example, as a result of manufacturing. As such, the shapes shown in the drawings may not depict the actual shapes of areas of the device, and the present disclosure is not limited thereto.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

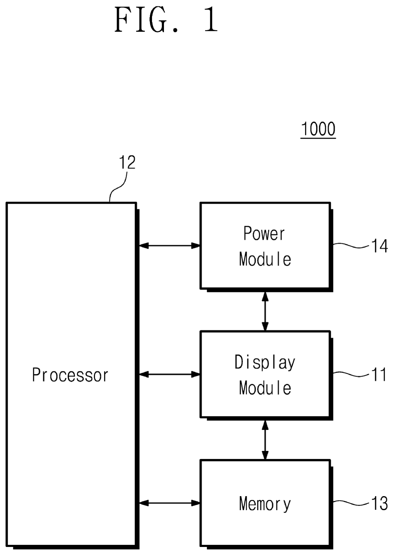

FIG. 1 is a block diagram of an electronic device 1000 according to an embodiment of the present disclosure.

Referring to FIG. 1, the electronic device 1000 according to an embodiment may include a display module (e.g., a display or a touch-display) 11, a processor 12, a memory 13, and a power module (e.g., a power circuit or a power supply circuit) 14.

The display module 11 may display an image. The image may include a still image as well as a dynamic image. The processor 12 may include at least one of a central processing unit (CPU), an application processor (AP), a graphic processing unit (GPU), a communication processor (CP), an image signal processor (ISP), and/or a controller. The processor 12 may control operations of the display module 11.

Data information used for operations of the processor 12 or the display module 11 may be stored in the memory 13. When the processor 12 executes an application stored in the memory 13, an image data signal and/or an input control signal may be transferred to the display module 11, and the display module 11 may process the provided signal to output image information through a display screen.

The power module 14 may include a power supply module, such as a power adapter or a battery device, and a power conversion module that converts power supplied by the power supply module to generate power used for operations of the electronic device 1000.

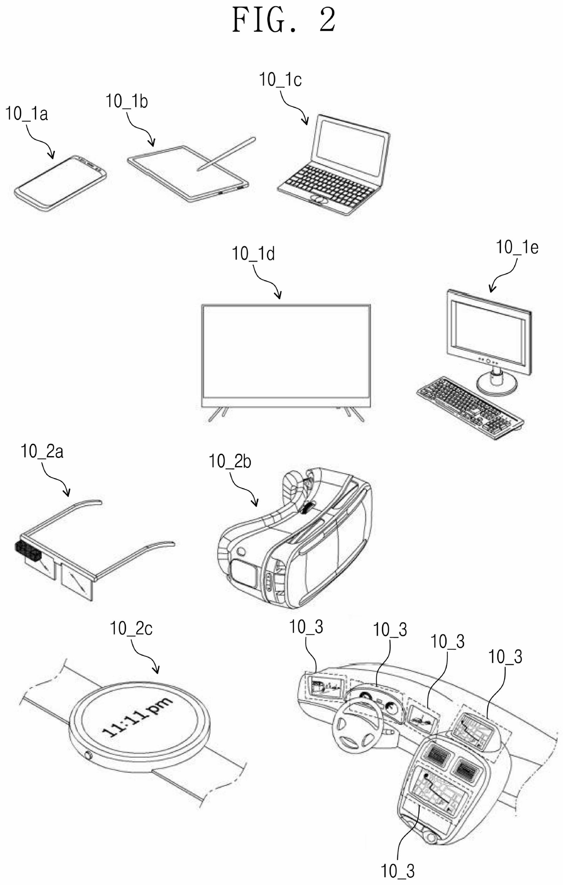

FIG. 2 illustrates schematic views of some electronic devices according to some embodiments of the present disclosure.

Referring to FIG. 2, various electronic devices to which display devices according to some embodiments may be applied may include electronic devices for displaying images, such as a smart phone 10_1a, a tablet PC 10_1b, a laptop computer 10_1c, a TV 10_1d, and a desk monitor 10_1e, as well as wearable electronic devices including a display module, such as smart glasses 10_2a, a head mounted display 10_2b, and a smart watch 10_2c, and vehicle electronic devices 10_3 including a display module, such as center information displays disposed on an instrument panel, a center fascia, and a dashboard of a vehicle, and a room mirror display.

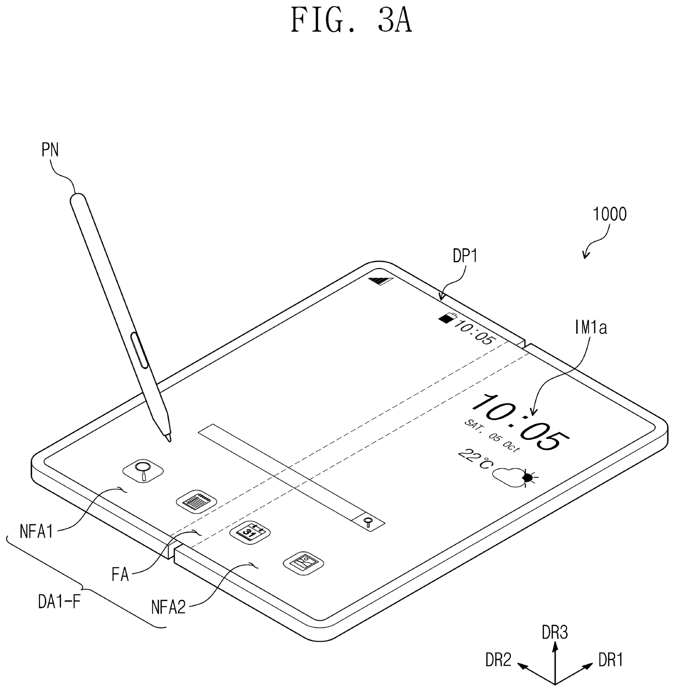

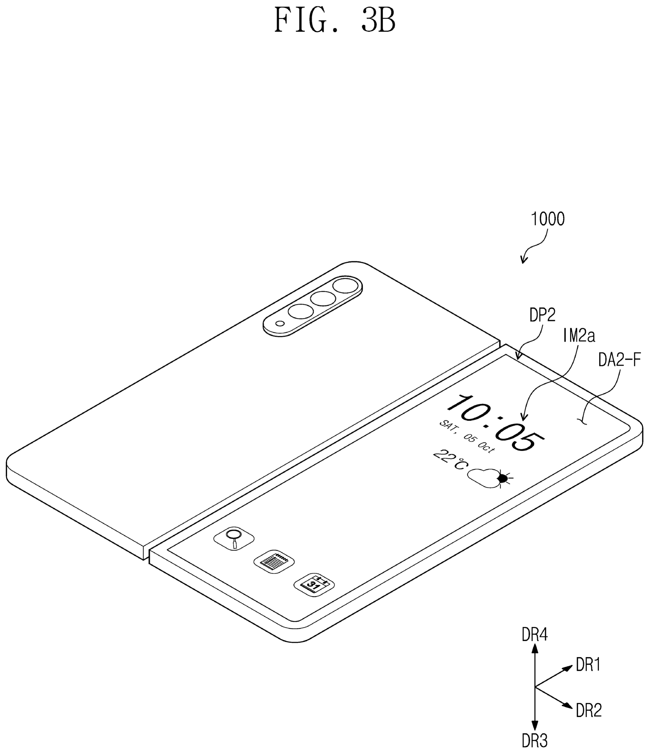

An example of an electronic device among the electronic devices according to the some embodiments will be described below in more detail with reference to FIGS. 3A and 3B.

FIG. 3A is a front perspective view of an electronic device 1000 according to an embodiment of the present disclosure. FIG. 3B is a rear perspective view of the electronic device 1000 according to an embodiment of the present disclosure.

Referring to FIGS. 3A and 3B, the electronic device 1000 may be a device that is activated in response to an electrical signal. For example, the electronic device 1000 may display an image, and may sense external inputs applied from the outside. The external inputs may be user inputs. The user inputs may include various suitable kinds of external inputs, such as a part of a user's body, a pen PN, light, heat, or pressure.

The electronic device 1000 may include a first display panel DP1 and a second display panel DP2. The first display panel DP1 and the second display panel DP2 may be separate panels that are separated from each other. The first display panel DP1 may be referred to as a main display panel, and the second display panel DP2 may be referred to as an auxiliary display panel or an external display panel.

The first display panel DP1 may include a first display part DA1-F, and the second display panel DP2 may include a second display part DA2-F. The second display panel DP2 may have a smaller area than that of the first display panel DP1. The area of the first display part DA1-F may be greater than the area of the second display part DA2-F in correspondence to the sizes of the first display panel DP1 and the second display panel DP2.

In an unfolded state of the electronic device 1000, the first display part DA1-F may have a plane that is parallel to or substantially parallel to a first direction DR1 and a second direction DR2. A thickness direction of the electronic device 1000 may be parallel to or substantially parallel to a third direction DR3 crossing the first direction DR1 and the second direction DR2. Accordingly, front surfaces (e.g., upper surfaces) and rear surfaces (e.g., lower surfaces) of members constituting the electronic device 1000 may be defined based on the third direction DR3.

The first display panel DP1 or the first display part DA1-F may include a folding area FA that may be folded and unfolded, and a plurality of non-folding areas NFA1 and NFA2 spaced apart from each other with the folding area FA therebetween. The second display panel DP2 may overlap with one of the plurality of non-folding areas NFA1 and NFA2. For example, the second display panel DP2 may overlap with the first non-folding area NFA1.

The display direction of a first image IM1a displayed on the first display panel DP1 and the display direction of a second image IM2a displayed on the second display panel DP2 may be opposite to each other. For example, the first image IM1a may be displayed in the third direction DR3, and the second image IM2a may be displayed in a fourth direction DR4 opposite to the third direction DR3.

In an embodiment of the present disclosure, the folding area FA may be bent about a folding axis extending in a direction parallel to or substantially parallel to the long sides of the electronic device 1000, for example, such as in a direction parallel to or substantially parallel to the first direction DR1. In an embodiment of the present disclosure, the folding area FA may extend in a direction parallel to or substantially parallel to the short sides of the electronic device 1000.

In a folded state of the electronic device 1000, the folding area FA has a suitable curvature (e.g., a certain or predetermined curvature) and a suitable radius of curvature (e.g., a certain or predetermined radius of curvature). The first non-folding area NFA1 and the second non-folding area NFA2 may face each other, and the electronic device 1000 may be folded in an inner-folding manner, such that the first display part DA1-F is not exposed to the outside.

In an embodiment of the present disclosure, the electronic device 1000 may be folded in an outer-folding manner, such that the first display part DA1-F is exposed to the outside. In an embodiment of the present disclosure, the electronic device 1000 may be folded in both an inner-folding manner or an outer-folding manner from the unfolded state, but the present disclosure is not limited thereto.

Although FIG. 3A illustrates an example in which one folding area FA is defined (e.g., is provided or included) in the electronic device 1000, the present disclosure is not limited thereto. For example, a plurality of folding axes and a plurality of folding areas corresponding thereto may be defined in the electronic device 1000, and the electronic device 1000 may be folded in an inner-folding manner and/or an outer-folding manner from the unfolded state in each of the plurality of folding areas.

According to an embodiment of the present disclosure, at least one of the first display panel DP1 and/or the second display panel DP2 may sense an input by the pen PN even without a digitizer. Accordingly, an increase in the thickness and the weight of the electronic device 1000, and a reduction in the flexibility of the electronic device 1000 due to the addition of a digitizer may not occur, because the digitizer for sensing the pen PN may be omitted. Thus, not only the first display panel DP1, but also the second display panel DP2, may be designed to sense the pen PN.

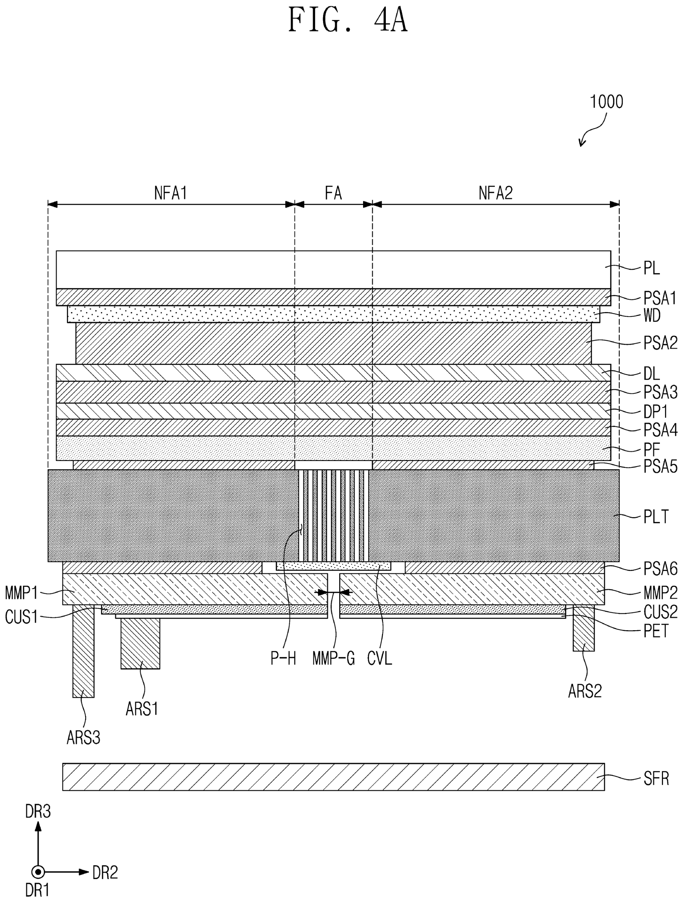

FIG. 4A is a sectional view of the electronic device 1000 according to an embodiment of the present disclosure. The sectional view illustrated in FIG. 4A may be a sectional view illustrating a portion including the first display panel DP1 of the electronic device 1000 illustrated in FIG. 3A.

Referring to FIG. 4A, the electronic device 1000 may include the first display panel DP1, upper functional layers, and lower functional layers. The upper functional layers may include components disposed on the first display panel DP1, and the lower functional layers may include components disposed under the first display panel DP1.

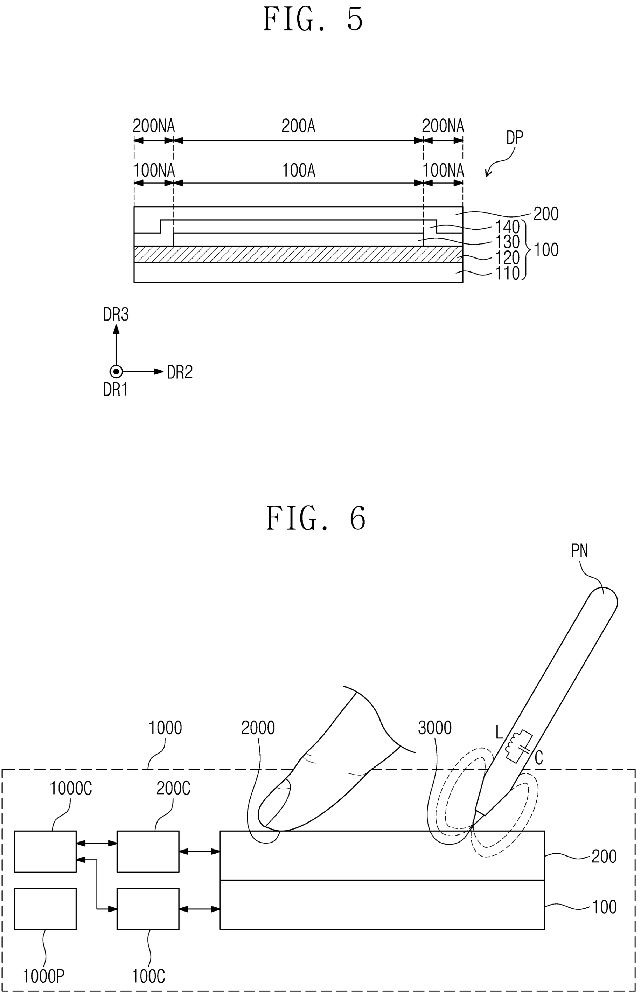

The first display panel DP1 may be a component that generates an image, and senses an input applied from the outside. For example, the first display panel DP1 may include a display layer 100 and a sensor layer 200 (e.g., refer to FIG. 5).

The upper functional layers may include a protective layer PL, a window WD, an impact absorbing layer DL, and first to third adhesive layers PSA1, PSA2, and PSA3. The components included in the upper functional layers are not limited to the aforementioned components. At least some of the aforementioned components may be omitted, and other components may be added.

The protective layer PL may protect the components disposed under the protective layer PL. A hard coating layer and an anti-fingerprint layer may be additionally provided to the protective layer PL to improve various properties, such as a chemical resistance and a wear resistance. For example, the hard coating layer may be a functional layer for improving usage characteristics of the electronic device 1000, and may be coated on the protective layer PL. For example, anti-fingerprint characteristics, anti-contamination characteristics, and anti-scratch characteristics may be improved by the hard coating layer. For example, the hard coating layer may have a thickness of five micrometers, but is not particularly limited thereto

The window WD may be disposed under the protective layer PL. The first adhesive layer PSA1 may be disposed between the window WD and the protective layer PL. In an embodiment of the present disclosure, a bezel pattern may be disposed between the first adhesive layer PSA1 and the protective layer PL.

The window WD may include an optically clear insulating material. For example, the window WD may include a glass substrate or a synthetic resin film. The window WD may have a multi-layered structure or a single-layer structure. For example, the window WD may include a plurality of synthetic resin films coupled to each other through an adhesive, or may include a glass substrate and a synthetic resin film coupled to each other through an adhesive. When the window WD is a glass substrate, the window WD may have a thickness of 80 micrometers or less, for example, such as 30 micrometers. However, the thickness of the window WD is not limited thereto.

The impact absorbing layer DL may be disposed under the window WD. The second adhesive layer PSA2 may be disposed between the window WD and the impact absorbing layer DL. The third adhesive layer PSA3 may be disposed between the impact absorbing layer DL and the first display panel DP1.

The impact absorbing layer DL may protect the first display panel DP1 by absorbing an impact applied toward the first display panel DP1. The impact absorbing layer DL may be manufactured in the form of an oriented film. For example, the impact absorbing layer DL may include a flexible plastic material. The flexible plastic material may be defined as a synthetic resin film. For example, the impact absorbing layer DL may include a flexible plastic material, such as polyimide or polyethylene terephthalate. In an embodiment of the present disclosure, the impact absorbing layer DL may be omitted as needed or desired.

The lower functional layers may include a protective film PF, a plate PLT, a cover layer CVL, a first magnetic field induction layer MMP1, a second magnetic field induction layer MMP2, a first lower sheet CUS1, a second lower sheet CUS2, an insulating film PET, step compensation members ARS1, ARS2, and ARS3, and fourth to sixth adhesive layers PSA4, PSA5, and PSA6. The components included in the lower functional layers are not limited to the aforementioned components. At least some of the aforementioned components may be omitted, and other components may be added.

The protective film PF may be coupled to the rear surface of the first display panel DP1 through the fourth adhesive layer PSA4. The protective film PF may prevent or substantially prevent scratches on the rear surface of the first display panel DP1 in a manufacturing process of the first display panel DP1. The protective film PF may be a colored polyimide film. For example, the protective film PF may be an opaque yellow film, but is not limited thereto.

The plate PLT may be disposed under the protective film PF. The fifth adhesive layer PSA5 may be disposed between the plate PLT and the protective film PF. The plate PLT may include a carbon fiber reinforced plastic (CFRP), a metal, or a metal alloy. The plate PLT may support the components disposed thereon.

Openings P-H may be defined (e.g., may be formed or provided) in a portion of the plate PLT. For example, the plate PLT may include the openings P-H that penetrate the plate PLT from top to bottom. The openings P-H may be defined in the area overlapping with the folding area FA. The openings P-H may overlap with the folding area FA when viewed from above the plane (e.g., in a plan view), for example, when viewed in the third direction DR3 or the thickness direction of the plate PLT. The shape of a portion of the plate PLT may be more easily deformed by the openings P-H.

The cover layer CVL may be attached to the plate PLT. The cover layer CVL may cover the openings P-H of the plate PLT. Accordingly, the cover layer CVL may prevent or substantially prevent infiltration of foreign matter into the openings P-H. The cover layer CVL may include a thermoplastic polyurethane, but is not particularly limited thereto.

The first magnetic field induction layer MMP1 and the second magnetic field induction layer MMP2 may be disposed under the first display panel DP1, for example, such as under the plate PLT and the cover layer CVL. The sixth adhesive layer PSA6 may be disposed between the first magnetic field induction layer MMP1, the second magnetic field induction layer MMP2, and the plate PLT.

Although FIG. 4A illustrates an example in which the first magnetic field induction layer MMP1 and the second magnetic field induction layer MMP2 are disposed under the plate PLT, the present disclosure is not particularly limited thereto. For example, the first magnetic field induction layer MMP1 and the second magnetic field induction layer MMP2 may be disposed on the plate PLT, and the plate PLT may include a metal. In this case, the plate PLT may function as the first lower sheet CUS1 and the second lower sheet CUS2 described in more detail below.

The first magnetic field induction layer MMP1 and the second magnetic field induction layer MMP2 may include a magnetic metal powder. The first magnetic field induction layer MMP1 and the second magnetic field induction layer MMP2 may be referred to as ferrite sheets, magnetic metal powder layers, magnetic layers, magnetic circuit layers, or magnetic path layers.

The first magnetic field induction layer MMP1 and the second magnetic field induction layer MMP2 may serve to induce a direction of a transmitted magnetic field in a different direction. Accordingly, the magnetic field reaching the first magnetic field induction layer MMP1 and the second magnetic field induction layer MMP2 may be induced in a direction toward the first display panel DP1, without being leaked to the outside, for example, such as below the first magnetic field induction layer MMP1 and the second magnetic field induction layer MMP2.

The first magnetic field induction layer MMP1 and the second magnetic field induction layer MMP2 may be spaced apart from each other in the second direction DR2. For example, the first magnetic field induction layer MMP1 and the second magnetic field induction layer MMP2 may be spaced apart from each other in the folding area FA. In this case, the first magnetic field induction layer MMP1 and the second magnetic field induction layer MMP2 may not be folded when the electronic device 1000 is folded and unfolded.

Because the first magnetic field induction layer MMP1 and the second magnetic field induction layer MMP2 are not folded, a degradation in a surface quality due to the first magnetic field induction layer MMP1 and the second magnetic field induction layer MMP2 may not occur. In addition, because the first magnetic field induction layer MMP1 and the second magnetic field induction layer MMP2 are not folded, cracks and air gaps may not occur in the magnetic materials included in the first magnetic field induction layer MMP1 and the second magnetic field induction layer MMP2. Thus, a reliability of the electronic device 1000 may be improved.

A gap MMP-G extending in the first direction DR1 may be defined between the first magnetic field induction layer MMP1 and the second magnetic field induction layer MMP2. The width of the gap MMP-G in the second direction DR2 may be 30 mm or less, but is not particularly limited thereto. Although FIG. 4A illustrates an example in which the width of the gap MMP-G is smaller than the width of the folding area FA in the second direction DR2, the present disclosure is not particularly limited thereto. For example, the width of the gap MMP-G may be equal to or substantially equal to the width of the folding area FA in the second direction DR2, or may be greater than or equal to the width of the folding area FA in the second direction DR2.

The first lower sheet CUS1 and the second lower sheet CUS2 may be disposed under the first magnetic field induction layer MMP1 and the second magnetic field induction layer MMP2, respectively. The first lower sheet CUS1 and the second lower sheet CUS2 may include a low resistance metal or a metal alloy. For example, the first lower sheet CUS1 and the second lower sheet CUS2 may include aluminum, copper, or a copper alloy.

The insulating film PET may be disposed under the first lower sheet CUS1 and the second lower sheet CUS2. The insulating film PET may include polyethylene terephthalate, but is not particularly limited thereto. The insulating film PET may prevent or substantially prevent the inflow of static electricity. For example, the insulating film PET may prevent or substantially prevent an electrical interference between members disposed on the insulating film PET and members disposed under the insulating film PET.

The step compensation members ARS1, ARS2, and ARS3 may include a first step compensation member ARS1 attached to the insulating film PET, a second step compensation member ARS2 attached to the second magnetic field induction layer MMP2, and a third step compensation member ARS3 attached to the first magnetic field induction layer MMP1. The thickness of each of the first to third step compensation members ARS1, ARS2, and ARS3 may be variously determined or modified depending on a product structure or an arrangement relationship between components.

In an embodiment of the present disclosure, the sixth adhesive layer PSA6, the first magnetic field induction layer MMP1, the second magnetic field induction layer MMP2, the first lower sheet CUS1, the second lower sheet CUS2, and the insulating film PET may each have a structure that is divided in a portion overlapping with the folding area FA. For example, the sixth adhesive layer PSA6, the first magnetic field induction layer MMP1, the second magnetic field induction layer MMP2, the first lower sheet CUS1, the second lower sheet CUS2, and the insulating film PET may each be divided into two components that are spaced apart from each other with a suitable gap (e.g., a certain or predetermined gap) therebetween in the portion overlapping with the folding area FA.

A set frame SFR may be disposed under the insulating film PET and the step compensation members ARS1, ARS2, and ARS3. The set frame SFR may include a metal portion.

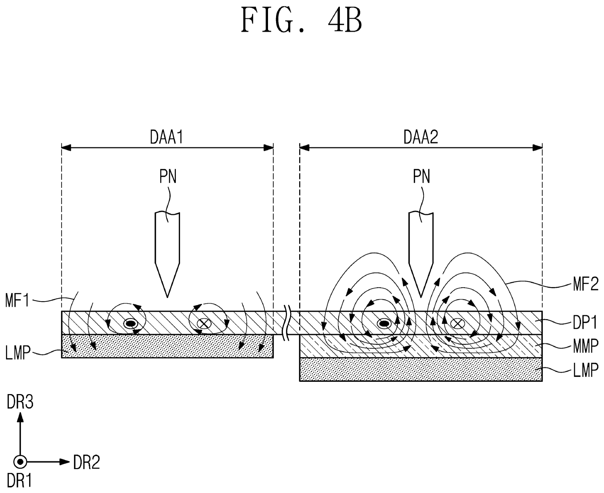

FIG. 4B is a view illustrating a change in a magnetic flux of a magnetic field generated in a display panel (e.g., the first display panel DP1).

Referring to FIGS. 4A and 4B, a first area DAA1 and a second area DAA2 of the first display panel DP1 are illustrated as an example. The first area DAA1 may be an area where the gap MMP-G is defined, and the second area DAA2 may be an area where the gap MMP-G is not defined. Accordingly, a magnetic field induction layer MMP may not be disposed between the first area DAA1 of the first display panel DP1 and a lower metal portion LMP. The magnetic field induction layer MMP may be the first magnetic field induction layer MMP1 or the second magnetic field induction layer MMP2 illustrated in FIG. 4A. The lower metal portion LMP may be a metal portion of the set frame SFR.

In the second area DAA2, the magnetic field induction layer MMP may be disposed under the first display panel DP1. The magnetic permeability of the magnetic field induction layer MMP may be higher than those of the first lower sheet CUS1 and the second lower sheet CUS2. As another example, the magnetic permeability of the magnetic field induction layer MMP may be higher than the magnetic permeability of the lower metal portion LMP. In addition, the lower metal portion LMP may include a metal having a relatively lower resistance. For example, the lower metal portion LMP may include aluminum, copper, or a copper alloy.

A magnetic flux MF1 due to a magnetic field formed in the first area DAA1 of the first display panel DP1 and a magnetic flux MF2 due to a magnetic field formed in the second area DAA2 of the first display panel DP1 are illustrated as an example.

The first magnetic field induction layer MMP1 and the second magnetic field induction layer MMP2 may not be disposed under the first area DAA1. In this case, the magnetic field formed in the first area DAA1 may escape through the gap MMP-G. An eddy current may be generated in the lower metal portion LMP by the magnetic field reaching the lower metal portion LMP, and thus, the magnetic flux density may be decreased. In other words, the magnetic field generated in the first area DAA1 may be shielded by the lower metal portion LMP. In addition, a magnetic field provided by the pen PN disposed over the first area DAA1 may also be shielded by the lower metal portion LMP.

The magnetic field induction layer MMP may be disposed under the second area DAA2. Because the magnetic field induction layer MMP has a higher magnetic permeability than that of the lower metal portion LMP, the magnetic flux MF2 introduced into the magnetic field induction layer MMP may be relatively rapidly transferred. In other words, the magnetic field induction layer MMP may induce and change the direction of the magnetic flux MF2 in a direction toward the first display panel DP1, thereby preventing or substantially preventing a magnetic flux attenuation by the lower metal portion LMP.

According to some embodiments of the present disclosure, the extension direction of third electrodes (e.g., referred to as charging electrodes) described in more detail below may be designed so as not to be aligned with the extension direction of the gap MMP-G, for example, such as the first direction DR1. Accordingly, a pen sensitivity deviation or variation may be reduced or eliminated, and thus, the pen sensing performance of the electronic device 1000 may be improved.

FIG. 5 is a schematic sectional view of a display panel DP according to an embodiment of the present disclosure.

Referring to FIG. 5, the display panel DP may include the display layer 100 and the sensor layer 200. An upper functional member may be additionally disposed on the sensor layer 200. For example, the upper functional member may include at least one of an anti-reflective layer, a window, and/or a protective film.

The display layer 100 may be a component that generates or substantially generates an image. A display area 100A and a non-display area 100NA adjacent to the display area 100A may be defined in the display layer 100. The image may be displayed in the display area 100A.

The display layer 100 may be an emissive display layer. For example, the display layer 100 may be an organic light emitting display layer, an inorganic light emitting display layer, an organic-inorganic light emitting display layer, a quantum-dot display layer, a micro-LED display layer, or a nano-LED display layer. The display layer 100 may include a base layer 110, a circuit layer 120, a light emitting element layer 130, and an encapsulation layer 140.

The base layer 110 may be a member that provides a base surface on which the circuit layer 120 is disposed. The base layer 110 may have a multi-layered structure or a single-layer structure. The base layer 110 may be a glass substrate, a metal substrate, a silicon substrate, or a polymer substrate, but is not particularly limited thereto.

The circuit layer 120 may be disposed on the base layer 110. The circuit layer 120 may include an insulating layer, a semiconductor pattern, a conductive pattern, and a signal line. An insulating layer, a semiconductor layer, and a conductive layer may be formed on the base layer 110 by coating or deposition. The insulating layer, the semiconductor layer, and the conductive layer may be selectively subjected to patterning by performing a photolithography process a plurality of times.

The light emitting element layer 130 may be disposed on the circuit layer 120. The light emitting element layer 130 may include a light emitting element. For example, the light emitting element layer 130 may include an organic luminescent material, an inorganic luminescent material, an organic-inorganic luminescent material, a quantum dot, a quantum rod, a micro-LED, or a nano-LED.

The encapsulation layer 140 may be disposed on the light emitting element layer 130. The encapsulation layer 140 may protect the light emitting element layer 130 from foreign matter, such as moisture, oxygen, and dust particles.

The sensor layer 200 may be disposed on the display layer 100. A sensing area 200A and a peripheral area 200NA adjacent to the sensing area 200A may be defined in the sensor layer 200. The sensing area 200A may overlap with the display area 100A, and the peripheral area 200NA may overlap with the non-display area 100NA.

According to an embodiment of the present disclosure, the area of the sensing area 200A may be greater than or equal to the area of the display area 100A. Although FIG. 5 illustrates an example in which the area of the sensing area 200A and the area of the display area 100A are equal to or substantially equal to each other, the present disclosure is not limited thereto. For example, a portion of the sensing area 200A may overlap with the non-display area 100NA, and the area of the sensing area 200A may be greater than the area of the display area 100A. In this case, even though an input occurs adjacent to the boundary between the display area 100A and the non-display area 100NA, a signal may be sufficiently recognized, because the sensing area 200A overlaps with a portion of the non-display area 100NA. Accordingly, a coordinate accuracy for a touch input to the periphery of the display area 100A may be further improved.

The sensor layer 200 may sense an external input applied from the outside. The sensor layer 200 may be an integrated sensor that is continuously formed in a manufacturing process of the display layer 100, or the sensor layer 200 may be an external sensor that is attached to the display layer 100. The sensor layer 200 may be referred to as a sensor, an input sensing layer, an input sensing panel, or an electronic device for sensing input coordinates.

According to an embodiment of the present disclosure, the sensor layer 200 may sense both an input by a passive input means, such as the user's body, and an input by an input device that generates a magnetic field having a suitable resonant frequency (e.g., a certain or predetermined resonant frequency). The input device may be referred to as a pen, an input pen, a magnetic pen, a stylus pen, or an electromagnetic resonance pen.

FIG. 6 is a schematic view illustrating an operation of the electronic device 1000 according to an embodiment of the present disclosure.

Referring to FIG. 6, the electronic device 1000 may include the display layer 100, the sensor layer 200, a display driver 100C, a sensor driver 200C, a main driver 1000C, and a power circuit 1000P.

The sensor layer 200 may sense a first input 2000 or a second input 3000 applied from the outside. Each of the first input 2000 and the second input 3000 may be an input by an input means capable of changing a capacitance of the sensor layer 200, or an input by an input means capable of causing an induced current in the sensor layer 200. For example, the first input 2000 may be an input by a passive input means, such as the user's body. The second input 3000 may be an input by the pen PN or an input by an RFIC tag. For example, the pen PN may be a passive pen or an active pen.

In an embodiment of the present disclosure, the pen PN may be a device that generates a magnetic field having a suitable resonant frequency (e.g., a certain or predetermined resonant frequency). The pen PN may transmit an output signal based on an electromagnetic resonance scheme. The pen PN may be referred to as an input device, an input pen, a magnetic pen, a stylus pen, or an electromagnetic resonance pen.

The pen PN may include an LC resonance circuit, and the LC resonance circuit may include an inductor L and a capacitor C. In an embodiment of the present disclosure, the LC resonant circuit may be a variable resonance circuit that varies the resonant frequency. In this case, the inductor L may be a variable inductor, and/or the capacitor C may be a variable capacitor. However, the present disclosure is not particularly limited thereto.

The inductor L generates a current by a magnetic field formed in the electronic device 1000, for example, such as in the sensor layer 200. However, the present disclosure is not particularly limited thereto. For example, when the pen PN operates as an active kind, the pen PN may generate a current even though a magnetic field is not provided from the outside. The generated current is transferred to the capacitor C. The capacitor C charges the current input from the inductor L, and discharges the charged current to the inductor L. Thereafter, the inductor L may emit a magnetic field having a resonant frequency. An induced current may flow in the sensor layer 200 due to the magnetic field emitted by the pen PN. The induced current may be transferred to the sensor driver 200C as a reception signal (e.g., a sensing signal or a signal).

The main driver 1000C may control the overall operations of the electronic device 1000. For example, the main driver 1000C may control an operation of the display driver 100C and the sensor driver 200C. In other words, the main driver 1000C may control an operation of the display layer 100 and the sensor layer 200. The main driver 1000C may include at least one microprocessor, and may further include a graphic controller. The main driver 1000C may be referred to as an application processor, a central processing unit, or a main processor. The main driver 1000C may correspond to the processor 12 illustrated in FIG. 1.

The display driver 100C may drive the display layer 100. The display driver 100C may receive image data and a control signal from the main driver 1000C. The control signal may include various suitable signals. For example, the control signal may include a vertical input synchronization signal, a horizontal input synchronization signal, a main clock signal, and a data enable signal.

The sensor driver 200C may drive the sensor layer 200. The sensor driver 200C may receive a control signal from the main driver 1000C. The control signal may include a clock signal of the sensor driver 200C. In addition, the control signal may further include a mode determination signal for determining an operation mode of the sensor driver 200C and the sensor layer 200.

The sensor driver 200C may be implemented with an integrated circuit (IC), and may be electrically connected with the sensor layer 200. For example, the sensor driver 200C may be directly mounted on a suitable area (e.g., a certain or predetermined area) of the display panel, or may be mounted on a separate printed circuit board in a chip on film (COF) manner and electrically connected with the sensor layer 200.

The sensor driver 200C and the sensor layer 200 may selectively operate in a first mode or a second mode. For example, the first mode may be a mode for sensing a touch input, for example, such as the first input 2000. The second mode may be a mode for sensing an input by the pen PN, for example, such as the second input 3000. The first mode may be referred to as a touch sensing mode, and the second mode may be referred to as a pen sensing mode.

The transition between the first mode and the second mode may be performed in various suitable ways. For example, the sensor driver 200C and the sensor layer 200 may be driven in the first mode and the second mode in a time division manner, and may sense the first input 2000 and the second input 3000. As another example, the transition between the first mode and the second mode may occur through a selection by the user, or a specific action (e.g., an input) of the user. As another example, by activation or deactivation of a specific application, one of the first mode and/or the second mode may be activated or deactivated, or the operation mode may be switched from one mode to the other mode. As another example, while the sensor driver 200C and the sensor layer 200 alternately operate in the first mode and the second mode, when the first input 2000 is sensed, the sensor driver 200C and the sensor layer 200 may remain in the first mode, and when the second input 3000 is sensed, the sensor driver 200C and the sensor layer 200 may remain in the second mode.

The sensor driver 200C may calculate coordinate information of an input based on a signal received from the sensor layer 200, and may provide a coordinate signal having the coordinate information to the main driver 1000C. The main driver 1000C executes an operation corresponding to the user input, based on the coordinate signal. For example, the main driver 1000C may operate the display driver 100C so that a new application image is displayed on the display layer 100.

The power circuit 1000P may include a power management integrated circuit (PMIC). The power circuit 1000P may generate a plurality of driving voltages for driving the display layer 100, the sensor layer 200, the display driver 100C, and the sensor driver 200C. For example, the plurality of driving voltages may include a gate high voltage, a gate low voltage, a first driving voltage, a second driving voltage, and an initialization voltage, but the present disclosure is not particularly limited thereto.

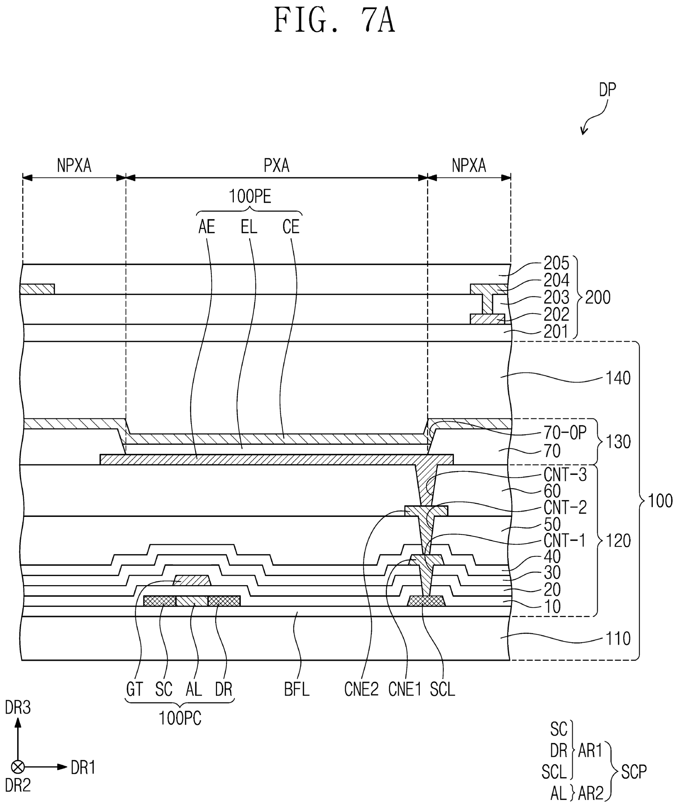

FIG. 7A is a sectional view of the display panel DP according to an embodiment of the present disclosure.

Referring to FIG. 7A, at least one buffer layer BFL may be formed on the upper surface of the base layer 110. The buffer layer BFL may improve a coupling force between the base layer 110 and a semiconductor pattern. The buffer layer BFL may be formed of multiple layers. As another example, the display layer 100 may further include a barrier layer. The buffer layer BFL may include at least one of silicon oxide, silicon nitride, and/or silicon oxy nitride. For example, the buffer layer BFL may include a structure in which silicon oxide layers and silicon nitride layers are alternately stacked one above another.

The semiconductor pattern SCP may be disposed on the buffer layer BFL. The semiconductor pattern SCP may include poly silicon. However, without being limited thereto, the semiconductor pattern SCP may include amorphous silicon, a low-temperature polycrystalline silicon, or an oxide semiconductor.

FIG. 7A illustrates a portion of the semiconductor pattern SCP, and the semiconductor pattern may be further disposed in other areas. The semiconductor pattern SCP may be arranged across the pixels according to a specific rule. The semiconductor pattern SCP may have different electrical properties depending on whether doping is performed or not. The semiconductor pattern SCP may include a first area AR1 having a higher conductivity, and a second area AR2 having a lower conductivity. The first area AR1 may be doped with an N-type dopant or a P-type dopant. A P-type transistor may include a doped area doped with a P-type dopant, and an N-type transistor may include a doped area doped with an N-type dopant. The second area AR2 may be a non-doped area, or may be an area that is more lightly doped than the first area AR1.

The first area AR1 may have a higher conductivity than that of the second area AR2, and may serve or substantially serve as an electrode or a signal line. The second area AR2 may correspond to or substantially correspond to an active area AL (e.g., a channel) of a transistor 100PC. In other words, the first area AR1 of the semiconductor pattern SCP may include a source area SC of the transistor 100PC, a drain area DR of the transistor 100PC, and a connecting signal line SCL. The second area AR2 of the semiconductor pattern SCP may include the active area AL of the transistor 100PC.

Each of the pixels may have an equivalent circuit including a plurality of transistors, at least one capacitor, and at least one light emitting element, but the equivalent circuit diagram of the pixel may be variously modified as needed or desired. In FIG. 7A, one transistor 100PC and one light emitting element 100PE included in the pixel are illustrated as an example.

The source area SC, the active area AL, and the drain area DR of the transistor 100PC may be formed from the semiconductor pattern SCP. The source area SC and the drain area DR may extend from the active area AL in opposite directions from each other on the cross-section (e.g., in a cross-sectional view). In FIG. 7A, a portion of the connecting signal line SCL formed from the semiconductor pattern SCP is illustrated. In another view, the connecting signal line SCL may be connected to the drain area DR of the transistor 100PC when viewed from above the plane (e.g., in a plan view).

A first insulating layer 10 may be disposed on the buffer layer BFL. The first insulating layer 10 may commonly overlap with the plurality of pixels, and may cover the semiconductor pattern SCP. The first insulating layer 10 may be an inorganic layer and/or an organic layer, and may have a single-layer structure or a multi-layered structure. The first insulating layer 10 may include at least one of aluminum oxide, titanium oxide, silicon oxide, silicon nitride, silicon oxy nitride, zirconium oxide, and/or hafnium oxide. In the present embodiment, the first insulating layer 10 may be a single silicon oxide layer. Not only the first insulating layer 10, but also insulating layers of the circuit layer 120 to be described in more detail below, may be inorganic layers and/or organic layers, and may have a single-layer structure or a multi-layered structure. The inorganic layers may include at least one of the aforementioned materials, but the present disclosure is not limited thereto.

A gate GT of the transistor 100PC is disposed on the first insulating layer 10. The gate GT may be a portion of a metal pattern. The gate GT overlaps with the active area AL. The gate GT may function as a mask in a process of doping or reducing the semiconductor pattern SCP.

A second insulating layer 20 may be disposed on the first insulating layer 10, and may cover the gate GT. The second insulating layer 20 may commonly overlap with the pixels. The second insulating layer 20 may be an inorganic layer and/or an organic layer, and may have a single-layer structure or a multi-layered structure. The second insulating layer 20 may include at least one of silicon oxide, silicon nitride, and/or silicon oxy nitride. In the present embodiment, the second insulating layer 20 may have a multi-layered structure including a silicon oxide layer and a silicon nitride layer.

A third insulating layer 30 may be disposed on the second insulating layer 20. The third insulating layer 30 may have a single-layer structure or a multi-layered structure. For example, the third insulating layer 30 may have a multi-layered structure including a silicon oxide layer and a silicon nitride layer.

A first connecting electrode CNE1 may be disposed on the third insulating layer 30. The first connecting electrode CNE1 may be connected to the connecting signal line SCL through a contact hole CNT-1 that penetrates the first insulating layer 10, the second insulating layer 20, and the third insulating layer30.

A fourth insulating layer 40 may be disposed on the third insulating layer 30. The fourth insulating layer 40 may be a single silicon oxide layer. A fifth insulating layer 50 may be disposed on the fourth insulating layer 40. The fifth insulating layer 50 may be an organic layer.

A second connecting electrode CNE2 may be disposed on the fifth insulating layer 50. The second connecting electrode CNE2 may be connected to the first connecting electrode CNE1 through a contact hole CNT-2 that penetrates the fourth insulating layer 40 and the fifth insulating layer 50.

A sixth insulating layer 60 may be disposed on the fifth insulating layer 50, and may cover the second connecting electrode CNE2. The sixth insulating layer 60 may be an organic layer.

The light emitting element layer 130 may be disposed on the circuit layer 120. The light emitting element layer 130 may include the light emitting element 100PE. For example, the light emitting element layer 130 may include an organic luminescent material, an inorganic luminescent material, an organic-inorganic luminescent material, a quantum dot, a quantum rod, a micro-LED, or a nano-LED. Hereinafter, the light emitting element 100PE may be described in more detail in the context of an organic light emitting element. However, the present disclosure is not particularly limited thereto.

The light emitting element 100PE may include a first electrode AE, an emissive layer EL, and a second electrode CE. The light emitting element 100PE may be disposed in the display area 100A (e.g., refer to FIG. 5). The first electrode AE may be referred to as a pixel electrode, and the second electrode CE may be referred to as a common electrode.

The first electrode AE may be disposed on the sixth insulating layer 60. The first electrode AE may be connected to the second connecting electrode CNE2 through a contact hole CNT-3 that penetrates the sixth insulating layer 60.

A pixel defining layer 70 may be disposed on the sixth insulating layer 60, and may cover a portion of the first electrode AE. An opening 70-OP is defined in the pixel defining layer 70. The opening 70-OP of the pixel defining layer 70 exposes at least a portion of the first electrode AE.

The display area 100A (e.g., refer to FIG. 5) may include an emissive area PXA, and a non-emissive area NPXA adjacent to the emissive area PXA. The non-emissive area NPXA may surround (e.g., around a periphery of) the emissive area PXA. In the present embodiment, the emissive area PXA is defined to correspond to a partial area of the first electrode AE exposed by the opening 70-OP.

The emissive layer EL may be disposed on the first electrode AE. The emissive layer EL may be disposed in an area corresponding to the opening 70-OP. Although FIG. 7A illustrates an example in which the emissive layer EL is disposed in the opening 70-OP, the present disclosure is not particularly limited thereto. For example, the emissive layer EL may extend to cover the side surface of the pixel defining layer 70 that defines the opening 70-OP and a portion of the upper surface of the pixel defining layer 70.

In an embodiment of the present disclosure, the emissive layer EL may be separately included in each of the pixels. When the emissive layer EL is separately formed in each of the pixels, each of the emissive layers EL may emit at least one of a blue light, a red light, and/or a green light. However, the present disclosure is not limited thereto, and the emissive layer EL may have a one-body shape to be commonly included in the plurality of pixels. In this case, the emissive layer EL may provide a blue light or a white light.

The second electrode CE may be disposed on the emissive layer EL. The second electrode CE may have a one-body shape, and may be commonly included in the plurality of pixels.

In an embodiment of the present disclosure, a hole control layer may be disposed between the first electrode AE and the emissive layer EL. The hole control layer may be commonly disposed in the emissive area PXA and the non-emissive area NPXA. The hole control layer may include a hole transport layer, and may further include a hole injection layer as needed or desired. An electron control layer may be disposed between the emissive layer EL and the second electrode CE. The electron control layer may include an electron transport layer, and may further include an electron injection layer as needed or desired. The hole control layer and the electron control layer may be commonly formed in the plurality of pixels using an open mask or an ink-jet process.

The encapsulation layer 140 may be disposed on the light emitting element layer 130. The encapsulation layer 140 may include an inorganic layer, an organic layer, and an inorganic layer sequentially stacked one above another. However, the layers constituting the encapsulation layer 140 are not limited thereto. The inorganic layers may protect the light emitting element layer 130 from moisture and oxygen, and the organic layer may protect the light emitting element layer 130 from foreign matter, such as dust particles. The inorganic layers may include a silicon nitride layer, a silicon oxy nitride layer, a silicon oxide layer, a titanium oxide layer, or an aluminum oxide layer. The organic layer may include an acrylic organic layer, but is not limited thereto.

The sensor layer 200 may include a base layer 201, a first conductive layer 202, an intermediate insulating layer 203, a second conductive layer 204, and a cover insulating layer 205.

The base layer 201 may be an inorganic layer including at least one of silicon nitride, silicon oxy nitride, and/or silicon oxide. As another example, the base layer 201 may be an organic layer including an epoxy resin, an acrylic resin, or an imide-based resin. The base layer 201 may have a single-layer structure, or may have a multi-layered structure stacked in the third direction DR3. In an embodiment of the present disclosure, the sensor layer 200 may not include the base layer 201.

Each of the first conductive layer 202 and the second conductive layer 204 may have a single-layer structure, or may have a multi-layered structure stacked in the third direction DR3.

Each of the first conductive layer 202 and the second conductive layer 204 that have a single-layer structure may include a metal layer or a transparent conductive layer. The metal layer may include molybdenum, silver, titanium, copper, aluminum, or an alloy thereof. The transparent conductive layer may include a transparent conductive oxide, such as indium tin oxide (ITO), indium zinc oxide (IZO), zinc oxide (ZnO), or indium zinc tin oxide (IZTO). In addition, the transparent conductive layer may include a conductive polymer, such as poly(3,4-ethylenedioxythiophene) (PEDOT), a metal nano wire, or graphene.

Each of the first conductive layer 202 and the second conductive layer 204 that have a multi-layered structure may include a plurality of metal layers. The metal layers may have, for example, a three-layered structure of titanium/aluminum/titanium. The conductive layer having the multi-layered structure may include at least one metal layer and at least one transparent conductive layer.

In an embodiment of the present disclosure, the thickness of the first conductive layer 202 may be greater than or equal to the thickness of the second conductive layer 204. When the thickness of the first conductive layer 202 is greater than the thickness of the second conductive layer 204, a resistance of a component (e.g., an electrode, a pattern, or a bridge pattern) included in the first conductive layer 202 may be reduced. In addition, because the first conductive layer 202 may be disposed under the second conductive layer 204, a probability that components included in the first conductive layer 202 will be visually recognized due to a reflection of external light may be lower than that of the second conductive layer 204, even though the thickness of the first conductive layer 202 is increased.

At least one of the intermediate insulating layer 203 and/or the cover insulating layer 205 may include an inorganic film. The inorganic film may include at least one of aluminum oxide, titanium oxide, silicon oxide, silicon nitride, silicon oxy nitride, zirconium oxide, and/or hafnium oxide.

At least one of the intermediate insulating layer 203 and/or the cover insulating layer 205 may include an organic film. The organic film may include at least one of an acrylic resin, a methacrylic resin, a polyisoprene resin, a vinyl resin, an epoxy resin, a urethane-based resin, a celluosic resin, a siloxane-based resin, a polyimide resin, a polyamide resin, and/or a perylene-based resin.

Although the sensor layer 200 is described as including the first conductive layer 202 and the second conductive layer 204, or in other words, a total of two conductive layers, the present disclosure is not particularly limited thereto. For example, the sensor layer 200 may include three or more conductive layers.

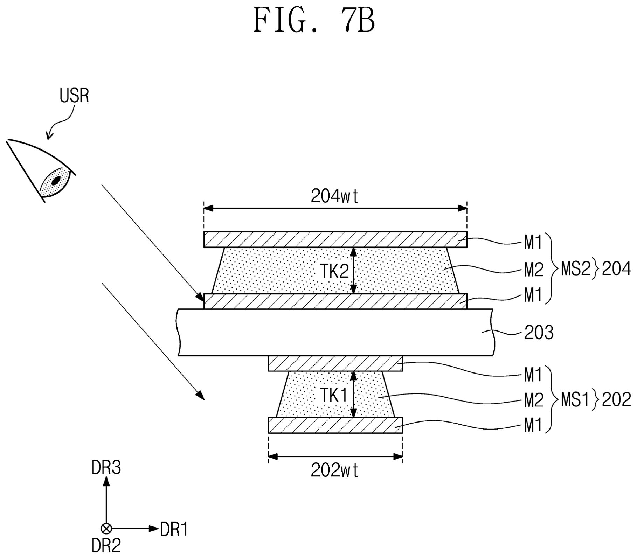

FIG. 7B is a sectional view illustrating some components of the sensor layer 200 according to an embodiment of the present disclosure.

Referring to FIGS. 7A and 7B, a second width 204wt of a second mesh line MS2 included in the second conductive layer 204 may be greater than or equal to a first width 202wt of a first mesh line MS1 included in the first conductive layer 202. When a user USR views the first mesh line MS1 and the second mesh line MS2 from the side, a probability that the first mesh line MS1 will be visually recognized by the user USR may be reduced, because the first mesh line MS1 has a smaller width than that of the second mesh line MS2.

Each of the first mesh line MS1 and the second mesh line MS2 may include first metal layers M1, and a second metal layer M2 disposed between the first metal layers M1. For example, the first metal layers M1 may include titanium (Ti), and the second metal layer M2 may include aluminum (Al). However, the present disclosure is not particularly limited thereto.

In an embodiment of the present disclosure, a first thickness TK1 of the second metal layer M2 of the first mesh line MS1 and a second thickness TK2 of the second metal layer M2 of the second mesh line MS2 may be the same or substantially the same as each other, but the present disclosure is not particularly limited thereto. For example, the first thickness TK1 may be greater than the second thickness TK2. As another example, the second thickness TK2 may be greater than the first thickness TK1. In an embodiment of the present disclosure, each of the first thickness TK1 and the second thickness TK2 may be 1000Å or more, for example, such as 6000Å.

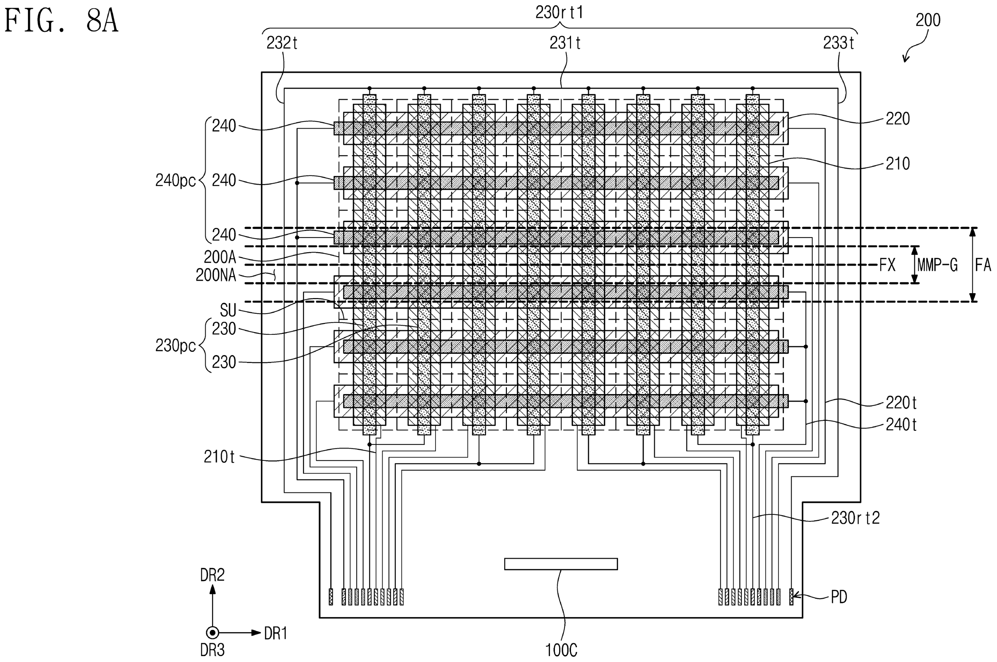

FIG. 8A is a plan view of the sensor layer 200 according to an embodiment of the present disclosure.

Referring to FIG. 8A, the sensing area 200A and the peripheral area 200NA adjacent to the sensing area 200A may be defined in the sensor layer 200.

The sensor layer 200 may include a plurality of first electrodes 210, a plurality of second electrodes 220, a plurality of third electrodes 230, and a plurality of fourth electrodes 240 disposed in the sensing area 200A. In an embodiment of the present disclosure, the plurality of fourth electrodes 240 may be omitted as needed or desired. As another example, the plurality of fourth electrodes 240 may be included in the display layer 100 (e.g., refer to FIG. 7A) rather than in the sensor layer 200, or may be disposed under the display layer 100.

Each of the first electrodes 210 may cross the second electrodes 220. Each of the first electrodes 210 may extend in the second direction DR2, and the first electrodes 210 may be spaced apart from one another along the first direction DR1. Each of the second electrodes 220 may extend in the first direction DR1, and the second electrodes 220 may be spaced apart from one another along the second direction DR2. A sensing unit (e.g., a sensing region) SU of the sensor layer 200 may be an area where one first electrode 210 and one second electrode 220 cross each other.

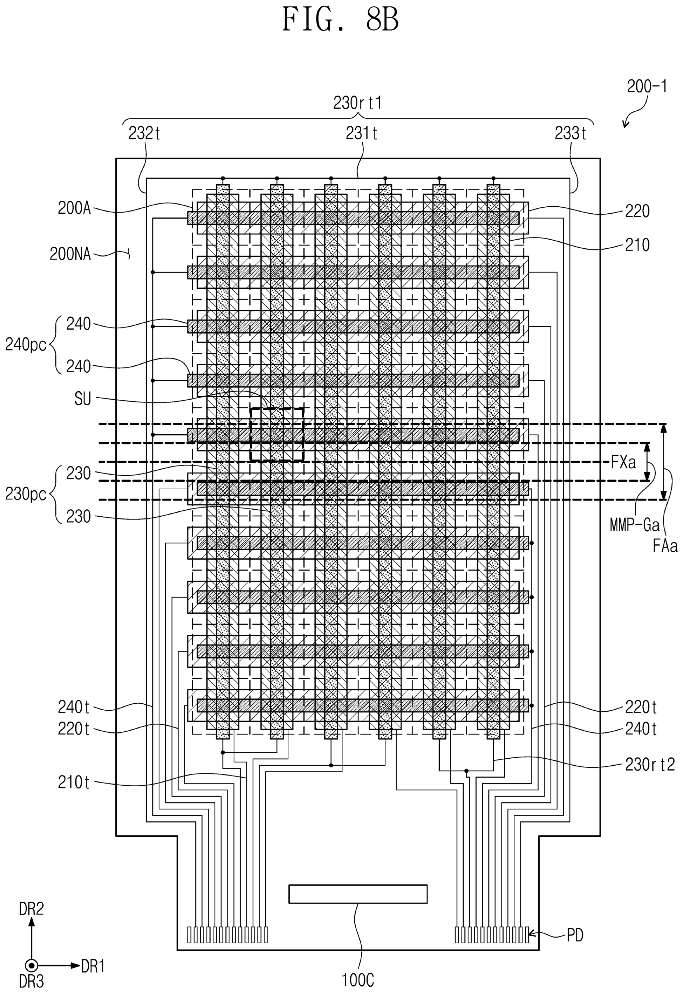

In an embodiment of the present disclosure, the width of the sensing area 200A in the first direction DR1 may be greater than the width of the sensing area 200A in the second direction DR2. Accordingly, the number of first electrodes 210 arranged along the first direction DR1 may be larger than the number of second electrodes 220 arranged along the second direction DR2. In FIG. 8, eight first electrodes 210 and six second electrodes 220 are illustrated as an example, and thus, 48 sensing units SU are illustrated as an example. However, the number of first electrodes 210 and the number of second electrodes 220 are not limited thereto.

Each of the third electrodes 230 may extend in the second direction DR2, and the third electrodes 230 may be spaced apart from one another in the first direction DR1. One third electrode 230 may at least partially overlap with one first electrode 210. According to an embodiment of the present disclosure, the capacitance (e.g., coupling capacitance) between one first electrode 210 and one third electrode 230 may be adjusted by adjusting the overlapping area between the one first electrode 210 and the one third electrode 230.

In an embodiment of the present disclosure, at least some of the third electrodes 230 may be connected in parallel with each other. For example, FIG. 8A illustrates an example in which two third electrodes 230 are connected in parallel with each other to form a first electrode group 230pc, and four first electrode groups 230pc may be arranged along the first direction DR1. However, the number of third electrodes 230 constituting one first electrode group 230pc is not limited thereto. For example, one first electrode group 230pc may include only one third electrode 230, or may include three or more third electrodes 230.

As the number of third electrodes 230 included in the first electrode group 230pc and connected in parallel with each other is increased, a resistance of the first electrode group 230pc may be lowered, and thus, a power efficiency and a sensing sensitivity may be improved. On the other hand, as the number of third electrodes 230 included in the first electrode group 230pc is decreased, a loop coil pattern formed using the first electrode group 230pc may be implemented in more diverse forms.

The fourth electrodes 240 may be arranged along the second direction DR2, and may extend in the first direction DR1. One fourth electrode 240 may at least partially overlap with one second electrode 220. According to an embodiment of the present disclosure, a capacitance (e.g., a coupling capacitance) between one second electrode 220 and one fourth electrode 240 may be adjusted by adjusting the overlapping area between the one second electrode 220 and the one fourth electrode 240.

In an embodiment of the present disclosure, at least some of the fourth electrodes 240 may be electrically connected to each other to constitute one second electrode group 240pc. For example, FIG. 8A illustrates an example in which three fourth electrodes 240 are connected to the same one trace line, for example, such as to one auxiliary trace line 240t, to constitute one second electrode group 240pc. Accordingly, in FIG. 8A, two second electrode groups 240pc are illustrated as being arranged along the second direction DR2. However, the number of fourth electrodes 240 constituting one second electrode group 240pc is not limited thereto. For example, the number of fourth electrodes 240 constituting one second electrode group 240pc may be six. In this case, the sensor layer 200 may include only one second electrode group 240pc.

The sensor layer 200 may further include a plurality of first trace lines 210t and a plurality of second trace lines 220t disposed in the peripheral area 200NA. The first trace lines 210t may be electrically connected to the first electrodes 210 in a one-to-one correspondence. The second trace lines 220t may be electrically connected to the second electrodes 220 in a one-to-one correspondence.

The sensor layer 200 may further include a first loop trace line 230rt1, second loop trace lines 230rt2, and auxiliary trace lines 240t disposed in the peripheral area 200NA. The first loop trace line 230rt1 may be referred to as a loop trace line, the second loop trace lines 230rt2 may be referred to as third trace lines or trace lines, and the auxiliary trace lines 240t may be referred to as fourth trace lines.

In an embodiment of the present disclosure, the first loop trace line 230rt1 may be electrically connected with the third electrodes 230. In other words, the first loop trace line 230rt1 may be electrically connected with all of the third electrodes 230. The third electrodes 230 may be referred to as charging electrodes.

The first loop trace line 230rt1 may include a first line portion 231t that extends in the first direction DR1 and electrically connected to the third electrodes 230, a second line portion 232t that extends from a first end of the first line portion 231t in the second direction DR2, and a third line portion 233t that extends from a second end of the first line portion 231t in the second direction DR2. The first line portion 231t may be referred to as a line portion. In an embodiment of the present disclosure, the second line portion 232t and the third line portion 233t may be omitted as needed or desired.

Each of the second line portion 232t and the third line portion 233t may extend in the same direction as that of the extension direction of the third electrodes 230, for example, such as in the second direction DR2. Each of the second line portion 232t and the third line portion 233t may serve as the first electrode group 230pc, and the same effect as placing the third electrodes 230 in the peripheral area 200NA may be obtained. For example, one of the second line portion 232t and/or the third line portion 233t and one of the third electrodes 230 may form a coil. Accordingly, a pen located in an area adjacent to the peripheral area 200NA may be sufficiently charged by a loop including the second line portion 232t or the third line portion 233t.

In an embodiment of the present disclosure, positions of the second line portion 232t and the third line portion 233t and widths thereof in the first direction DR1 may be variously adjusted to adjust a resistance of the second line portion 232t and a resistance of the third line portion 233t. In this case, the pen may be sufficiently charged through a current path including the second line portion 232t or the third line portion 233t. As a result, a pen charging performance of the electronic device 1000 (e.g., refer to FIG. 3A) may be improved. In other words, as a charging rate of the pen is improved, a signal-to-noise ratio of a signal provided from the pen may be increased. Accordingly, a linearity and an accuracy of a pen input may be improved.

The second loop trace lines 230rt2 may be connected to the first electrode groups 230pc in a one-to-one correspondence. In other words, the number of second loop trace lines 230rt2 may correspond to the number of first electrode groups 230pc. In FIG. 8A, four second loop trace lines 230rt2 and four first electrode groups 230pc are illustrated as an example.

Referring to FIGS. 4A and 8A together, the folding area FA may be folded and unfolded about a folding axis FX extending in the first direction DR1. Accordingly, the display layer 100 (e.g., refer to FIG. 5) and the sensor layer 200 may be folded and unfolded about the folding axis FX. The width of the folding area FA in the first direction DR1 may be greater than the width of the folding area FA in the second direction DR2.

The first magnetic field induction layer MMP1 and the second magnetic field induction layer MMP2 may be spaced apart from each other in the second direction DR2 in the folding area FA. Accordingly, the gap MMP-G extending in the first direction DR1 may be defined between the first magnetic field induction layer MMP1 and the second magnetic field induction layer MMP2.

According to an embodiment of the present disclosure, the arrangement direction of the third electrodes 230 may cross the separation direction of the first magnetic field induction layer MMP1 and the second magnetic field induction layer MMP2. Accordingly, a portion of each of the third electrodes 230, or in other words, portions of all of the third electrodes 230, may overlap with the gap MMP-G and the folding area FA. In addition, each of the third electrodes 230 may overlap with both the first magnetic field induction layer MMP1 and the second magnetic field induction layer MMP2.

As described above with reference to FIG. 4B, there may be a difference in a magnetic flux density between the area where the gap MMP-G is defined and the area where the gap MMP-G is not defined, and therefore, a sensitivity deviation or variation may occur. Even though a sensitivity deviation or variation occurs between the area where the gap MMP-G is defined and the area where the gap MMP-G is not defined, a deviation or variation in a charging performance and a deviation or variation in pen sensitivity may be reduced when the gap MMP-G overlaps with portions of all of the third electrodes 230 rather than overlapping with only some of the third electrodes 230. Accordingly, a charging performance using the third electrodes 230 may be uniform or substantially uniform, and thus, the pen sensing performance of the electronic device 1000 may be improved.

The auxiliary trace lines 240t may be spaced apart from each other with the sensing area 200A therebetween. The auxiliary trace lines 240t may be electrically connected to the second electrode groups 240pc in a one-to-one correspondence. FIG. 8A illustrates an example in which two second electrode groups 240pc are arranged. The auxiliary trace line 240t connected to one second electrode group 240pc and the auxiliary trace line 240t connected to the other second electrode group 240pc may be spaced apart from each other with the sensing area 200A therebetween. However, the present disclosure is not particularly limited thereto.

The sensor layer 200 may further include a plurality of pads PD disposed in the peripheral area 200NA. The pads PD may be arranged along the first direction DR1. Although FIG. 8A illustrates an example in which the pads PD are arranged along one row, the present disclosure is not particularly limited thereto. For example, the pads PD may be arranged along two or more rows.

FIG. 8B is a plan view of a sensor layer 200-1 according to an embodiment of the present disclosure. In FIG. 8B, the components that are the same or substantially the same as the components described above with reference to FIG. 8A are assigned with the same reference numerals, and thus, redundant description thereof may not be repeated hereinafter.

Referring to FIG. 8B, the width of a sensing area 200A in the first direction DR1 may be smaller than the width of the sensing area 200A in the second direction DR2. Accordingly, the number of first electrodes 210 arranged along the first direction DR1 may be smaller than the number of second electrodes 220 arranged along the second direction DR2.

Referring to FIGS. 4A and 8B together, a folding area FAa may be folded and unfolded about a folding axis FXa extending in the first direction DR1. The first magnetic field induction layer MMP1 and the second magnetic field induction layer MMP2 may be spaced apart from each other in the second direction DR2 in the folding area FAa. Accordingly, a gap MMP-Ga extending in the first direction DR1 may be defined between the first magnetic field induction layer MMP1 and the second magnetic field induction layer MMP2.

According to an embodiment of the present disclosure, even though a sensitivity deviation or variation occurs between the area where the gap MMP-Ga is defined and the area where the gap MMP-Ga is not defined, a deviation or variation in a charging performance and a deviation or variation in pen sensitivity may be reduced when the gap MMP-Ga overlaps with portions of all of third electrodes 230 rather than overlapping with only some of the third electrodes 230. Accordingly, a charging performance using the third electrodes 230 may be uniform, and thus, the pen sensing performance of the electronic device 1000 may be improved.

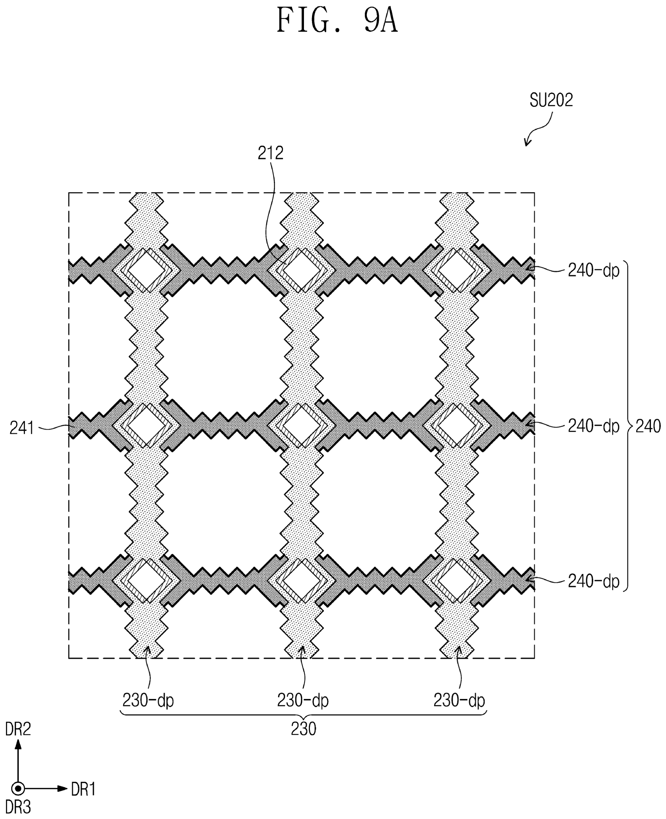

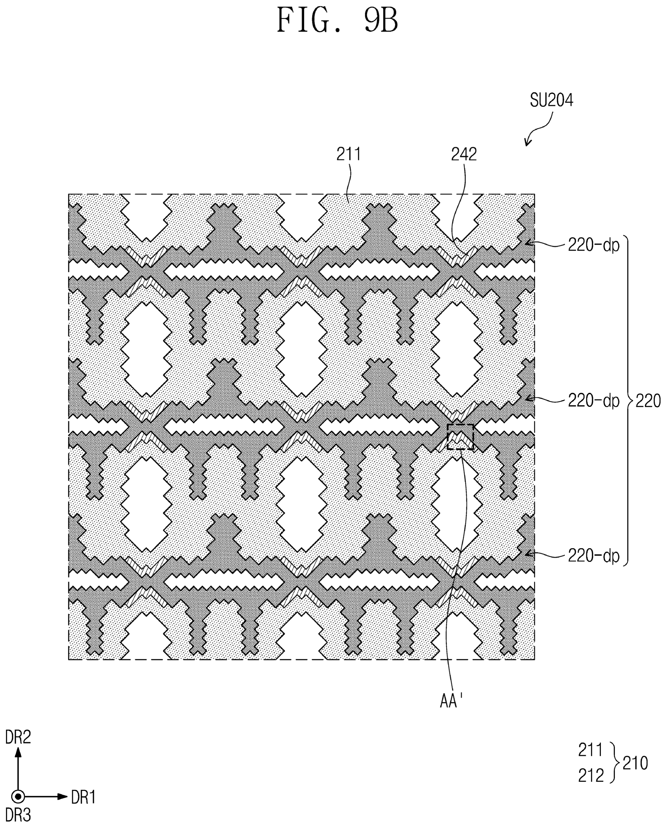

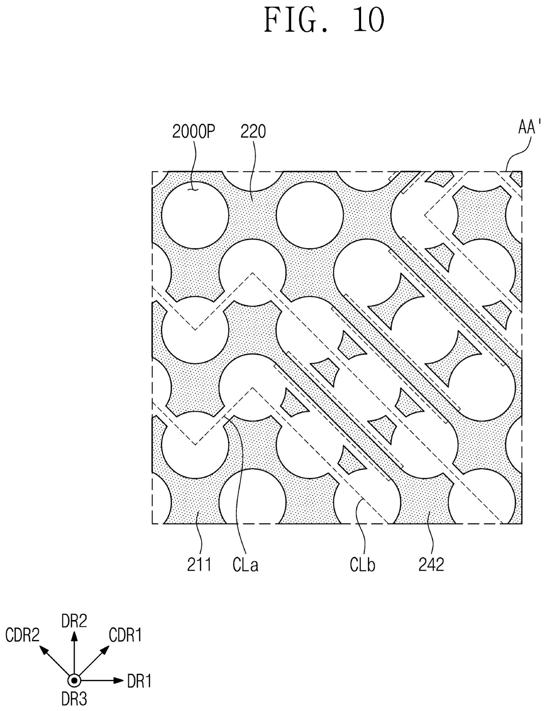

FIG. 9A is a plan view illustrating a first conductive layer SU202 of a sensing unit SU according to an embodiment of the present disclosure. FIG. 9B is a plan view illustrating a second conductive layer SU204 of the sensing unit SU according to an embodiment of the present disclosure. FIG. 10 is an enlarged plan view of the area AA' illustrated in FIG. 9B.

In FIGS. 9A and 9B, a shape of a mesh structure is not illustrated, and boundaries between components are briefly illustrated by lines. In other words, the lines illustrated in FIGS. 9A and 9B may be understood as corresponding to the lines where the mesh structure illustrated in FIG. 10 is removed, and in FIG. 10, lines CLa, and CLb are illustrated by dotted lines.

The shape of the sensing unit SU and the mesh structure illustrated in FIGS. 9A, 9B, and 10 are provided as examples, and the present disclosure is not limited thereto. The shape of the sensing unit SU and the mesh structure may be variously modified as needed or desired.

Referring to FIGS. 9A and 9B, the first electrode 210 may include a plurality of first patterns 211, and a plurality of first bridge patterns 212 electrically connected to the first patterns 211. The first patterns 211 may be spaced apart from one another in the second direction DR2, and may be electrically connected to each other by the first bridge patterns 212. The first patterns 211 may be included in the second conductive layer SU204, and the first bridge patterns 212 may be included in the first conductive layer SU202.

Two first patterns 211 that are adjacent to each other in the second direction DR2 in one first electrode 210 may be electrically connected with each other by six first bridge patterns 212. An increase in the number of first bridge patterns 212 arranged in the first direction DR1 crossing the second direction DR2 that is the extension direction of the first electrode 210 may correspond to an increase in the number of signal paths. Accordingly, as the number of signal paths is increased, a resistance of the first electrode 210 may be reduced. As a result, the sensing sensitivity of the sensor layer 200 may be improved.

The second electrode 220 may include a plurality of first divided electrodes 220-dp that are spaced apart from one another in the second direction DR2. Each of the first divided electrodes 220-dp may extend in the first direction DR1, and the first divided electrodes 220-dp may be spaced apart from one another in the second direction DR2. The first divided electrodes 220-dp may be included in the second conductive layer SU204. Three first divided electrodes 220-dp included in one second electrode 220 may be connected to one second trace line 220t (e.g., refer to FIG. 8A).

The third electrode 230 may include a plurality of second divided electrodes 230-dp spaced apart from one another in the first direction DR1. Each of the second divided electrodes 230-dp may extend in the second direction DR2. The second divided electrodes 230-dp may be spaced apart from one another in the first direction DR1. The second divided electrodes 230-dp may at least partially overlap with the first patterns 211 when viewed in the third direction DR3 (e.g., in a plan view).

Referring to FIGS. 8A and 9A together, one second loop trace line 230rt2 is electrically connected to one first electrode group 230pc. The one first electrode group 230pc may include two third electrodes 230. In this case, the one second loop trace line 230rt2 may be electrically connected to six second divided electrodes 230-dp. In this case, a degree to which the number of pads in the sensor layer 200 is increased may be reduced.

The fourth electrode 240 may include a plurality of third divided electrodes 240-dp spaced apart from one another in the second direction DR2. Each of the third divided electrodes 240-dp may extend in the first direction DR1. Each of the third divided electrodes 240-dp may include a plurality of second patterns 241, and a plurality of second bridge patterns 242 electrically connected to the second patterns 241. The second patterns 241 and the second bridge patterns 242 may be electrically connected with each other through contact holes defined in the first insulating layer 203 (e.g., refer to FIG. 7A). Two second patterns 241 adjacent to each other may be spaced apart from each other with one second divided electrode 230-dp and two first bridge patterns 212 therebetween.

Although FIGS. 9A and 9B illustrate an example in which three first divided electrodes 220-dp, three second divided electrodes 230-dp, and three third divided electrodes 240-dp are included in one sensing unit SU, the present disclosure is not particularly limited thereto. For example, the numbers of first divided electrodes 220-dp, second divided electrodes 230-dp, and third divided electrodes 240-dp included in one sensing unit SU may be one, two, or four or more.

In an embodiment of the present disclosure, a first capacitor may be defined between the first electrode 210 and the third electrode 230, and a second capacitor may be defined between the second electrode 220 and the fourth electrode 240. A first capacitance of the first capacitor and a second capacitance of the second capacitor may be adjusted by the overlapping area between the first electrode 210 and the third electrode 230 and the overlapping area between the second electrode 220 and the fourth electrode 240, respectively.

As the first capacitance and the second capacitance are increased, an amount of an induced current transferred from the third electrode 230 to the first electrode 210 may be increased, and an amount of an induced current transferred from the fourth electrode 240 to the second electrode 220 may be increased. Accordingly, the pen sensing performance of the sensor layer 200 may be improved as the first capacitance and the second capacitance are increased. In addition, the first capacitance and the second capacitance may act as loads during a touch sensing. Accordingly, the touch sensing performance may be improved as the first capacitance and the second capacitance are decreased.

In an embodiment of the present disclosure, the overlapping area between the first electrode 210 and the third electrode 230 and the overlapping area between the second electrode 220 and the fourth electrode 240 may be easily adjusted. Accordingly, the sensor layer 200 having appropriate levels of capacitances considering a touch sensitivity and a pen sensing sensitivity may be provided. As a result, the electronic device 1000 (e.g., refer to FIG. 3A) having improved pen sensitivity and touch sensitivity may be provided.

In an embodiment of the present disclosure, in the second conductive layer SU204 within one sensing unit SU, the area occupied by the components included in the first electrode 210 and the second electrode 220 may be greater than the area occupied by the components included in the third electrode 230 and the fourth electrode 240. A change in a capacitance due to the first input 2000 (e.g., refer to FIG. 6) may be increased as the distance is decreased. Accordingly, a component for sensing the first input 2000 (e.g., refer to FIG. 6) may be disposed in a larger area in a layer relatively adjacent to (e.g., closer to) the surface of the electronic device 1000 (e.g., refer to FIG. 6). As a result, a touch performance may be improved.

Referring to FIGS. 9A, 9B, and 10, each of the first to fourth electrodes 210, 220, 230, and 240 may have a mesh structure. The mesh structure may be a structure in which a plurality of openings 200OP are defined. Although FIG. 10 illustrates an example in which each of the plurality of openings 200OP has a circular shape with a certain curvature, the present disclosure is not particularly limited thereto. For example, each of the openings 200OP may be modified into various suitable shapes, such as a quadrangular shape, a polygonal shape, or an irregular shape.

In FIG. 10, portions of the first pattern 211, the second bridge pattern 242, and the second electrode 220 disposed in the second conductive layer SU204 are illustrated. The first pattern 211, the second bridge pattern 242, and the second electrode 220 may be electrically insulated from one another. For example, the first pattern 211, the second bridge pattern 242, and the second electrode 220 may be electrically insulated from one another by first lines CLa extending in a first crossing direction CDR1 that crosses the first direction DR1 and the second direction DR2, and second lines CLb extending in a second crossing direction CDR2 crossing the first crossing direction CDR1. A portion and another portion of the conductive layer may be spaced apart from each other with the first lines CLa and the second lines CLb therebetween.

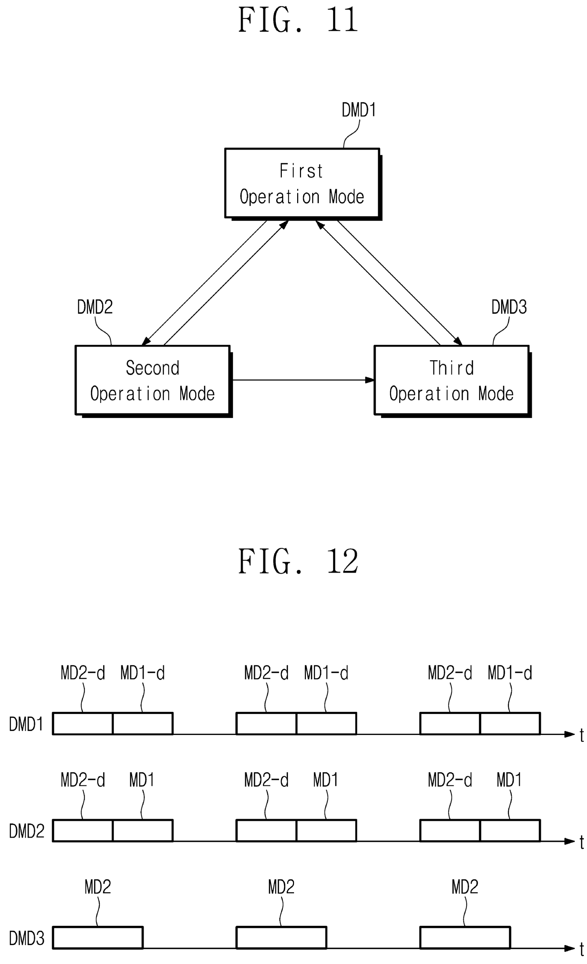

FIG. 11 is a block diagram illustrating an operation of the sensor driver 200C according to an embodiment of the present disclosure.

Referring to FIGS. 6 and 11, the sensor driver 200C may selectively operate in one of a first operation mode DMD1, a second operation mode DMD2, and a third operation mode DMD3.

The first operation mode DMD1 may be referred to as a touch and pen standby mode, the second operation mode DMD2 may be referred to as a touch activation and pen standby mode, and the third operation mode DMD3 may be referred to as a pen activation mode. The first operation mode DMD1 may be a mode for waiting for the first input 2000 and the second input 3000. The second operation mode DMD2 may be a mode for sensing the first input 2000 and waiting for the second input 3000. The third operation mode DMD3 may be a mode for sensing the second input 3000.

In an embodiment of the present disclosure, the sensor driver 200C may first operate in the first operation mode DMD1. When the first input 2000 is sensed in the first operation mode DMD1, the sensor driver 200C may be switched (e.g., changed) to the second operation mode DMD2. As another example, when the second input 3000 is sensed in the first operation mode DMD1, the sensor driver 200C may be switched (e.g., changed) to the third operation mode DMD3.

In an embodiment of the present disclosure, when the second input 3000 is sensed in the second operation mode DMD2, the sensor driver 200C may be switched to the third ooeration mode DMD3. When the first input 2000 is released (e.g., not sensed) in the second operation mode DMD2, the sensor driver 200C may be switched to the first operation mode DMD1. When the second input 3000 is released (e.g., not sensed) in the third operation mode DMD3, the sensor driver 200C may be switched to the first operation mode DMD1.

FIG. 12 illustrates an operation of the sensor driver 200C according to an embodiment of the present disclosure.

Referring to FIGS. 6, 11, and 12, operations in the first to third operation modes DMD1, DMD2, and DMD3 are illustrated in order of time t.

In the first operation mode DMD1, the sensor driver 200C may repeatedly operate in a second mode MD2-d and a first mode MD1-d. During the second mode MD2-d, the sensor layer 200 may be scan driven to detect the second input 3000. During the first mode MD1-d, the sensor layer 200 may be scan driven to detect the first input 2000. Although FIG. 12 illustrates an example in which the sensor driver 200C operates in the first mode MD1-d sequentially after the second mode MD2-d, the sequence is not limited thereto.

In the second operation mode DMD2, the sensor driver 200C may repeatedly operate in a second mode MD2-d and a first mode MD1. During the second mode MD2-d, the sensor layer 200 may be scan driven to detect the second input 3000. During the first mode MD1, the sensor layer 200 may be scan driven to detect the coordinates by the first input 2000.

In the third operation mode DMD3, the sensor driver 200C may operate in a second mode MD2. During the second mode MD2, the sensor layer 200 may be scan driven to detect the coordinates by the second input 3000. In the third operation mode DMD3, the sensor driver 200C may not operate in the first mode MD1-d or MD1 until the second input 3000 is released (e.g., not sensed).

Referring to FIG. 8A together, in the first mode MD1-d and the first mode MD1, both the third electrodes 230 and the fourth electrodes 240 may be grounded or may receive a constant voltage. As another example, in the first mode MD1-d and the first mode MD1, both the third electrodes 230 and the fourth electrodes 240 may be floated (e.g., electrically floated). As another example, in the first mode MD1-d and the first mode MD1, a signal having the same phase as a transmission signal provided to the first electrodes 210 may be applied to the third electrodes 230 and the fourth electrodes 240. In this case, introduction of a touch noise through the third electrodes 230 and the fourth electrodes 240 may be prevented or substantially prevented.

In the second mode MD2-d and the second mode MD2, first ends of the third electrodes 230 and the fourth electrodes 240 may all be floated. In addition, in the second mode MD2-d and the second mode MD2, second ends of the third electrodes 230 and the fourth electrodes 240 may all be grounded or floated. Accordingly, a compensation for a sensing signal may be maximized by the coupling between the first electrodes 210 and the third electrodes 230 and the coupling between the second electrodes 220 and the fourth electrodes 240.

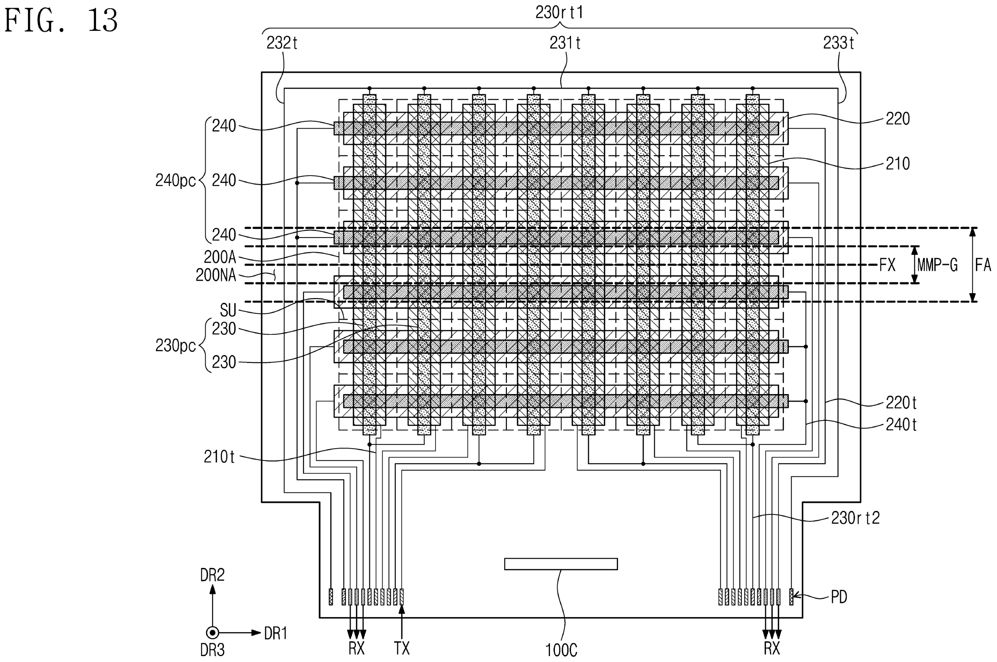

FIG. 13 is a schematic view illustrating a first mode according to an embodiment of the present disclosure.

Referring to FIGS. 6, 12, and 13, the first mode MD1-d of the first operation mode DMD1 and the first mode MD1 of the second operation mode DMD2 may include a mutual capacitance detection mode. FIG. 13 is a view illustrating the mutual capacitance detection mode in the first mode MD1-d of the first operation mode DMD1 and the first mode MD1 of the second operation mode DMD2.

In the mutual capacitance detection mode, the sensor driver 200C may sequentially provide a transmission signal TX to the first electrodes 210, and may detect the coordinates of the first input 2000 using a reception signal RX detected through the second electrodes 220. For example, the sensor driver 200C may calculate the input coordinates by sensing a change in a mutual capacitance between the first electrodes 210 and the second electrodes 220. As another example, the sensor driver 200C may sequentially provide the transmission signal TX to the second electrodes 220, and may detect the coordinates of the first input 2000 using the reception signal RX detected through the first electrodes 210.

FIG. 13 illustrates an example in which the transmission signal TX is provided to one first electrode 210 and the reception signal RX is output from the second electrodes 220. The sensor driver 200C may detect the input coordinates of the first input 2000 by sensing a change in a capacitance between the first electrode 210 and each of the second electrodes 220.

In an embodiment of the present disclosure, the transmission signal TX may be sequentially provided to the second electrodes 220, and the reception signal RX may be output from the first electrodes 210. In an embodiment of the present disclosure, one or more transmission signals TX having different frequencies or waveforms from each other may be concurrently (e.g., simultaneously or substantially simultaneously) output with each other to the first electrodes 210 or the second electrodes 220, and the reception signal RX may be output from the first electrodes 210 or the second electrodes 220.

In an embodiment of the present disclosure, at least one of the first mode MD1-d of the first operation mode DMD1 and/or the first mode MD1 of the second operation mode DMD2 may further include a self-capacitance detection mode. In the self-capacitance detection mode, the sensor driver 200C may calculate input coordinates by outputting driving signals to the first electrodes 210 and the second electrodes 220, and sensing a change in the capacitance of each of the first electrodes 210 and the second electrodes 220.

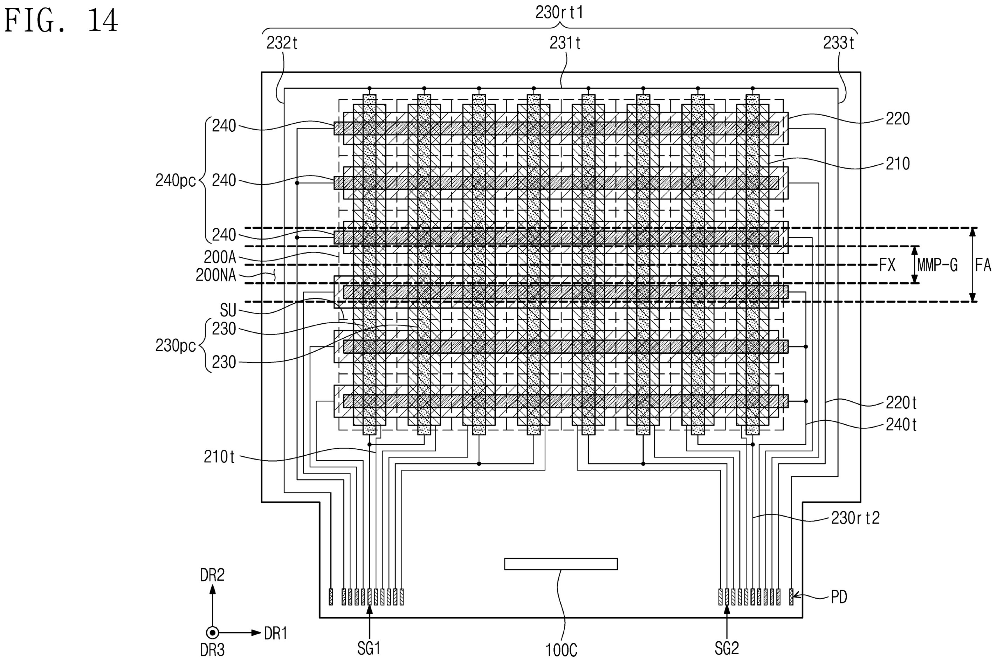

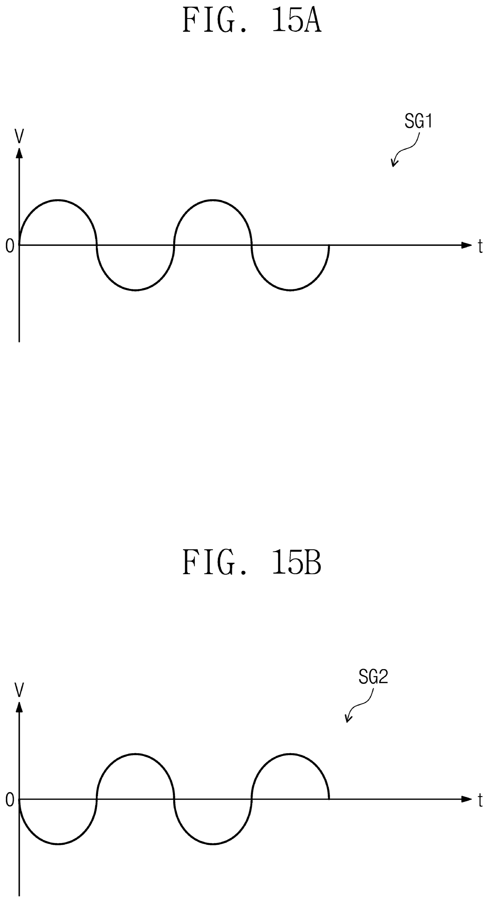

FIG. 14 is a schematic view illustrating the second mode according to an embodiment of the present disclosure. FIG. 15A is a graph depicting a waveform of a first signal SG1 according to an embodiment of the present disclosure. FIG. 15B is a graph depicting a waveform of a second signal SG2 according to an embodiment of the present disclosure.

Referring to FIGS. 14, 15A, and 15B, the second mode MD2 may include a charging operation mode. The charging operation mode may include a searching charging operation mode and a tracking charging operation mode. The searching charging operation mode may be omitted as desired.

The searching charging operation mode may be an operation mode before the position of the pen PN is sensed. Accordingly, the first signal SG1 or the second signal SG2 may be sequentially provided to all channels included in the sensor layer 200. In other words, in the searching charging operation mode, the whole area of the sensor layer 200 may be sequentially scanned. When the pen PN is sensed in the searching charging operation mode, the sensor layer 200 may be driven in the tracking charging operation mode. For example, in the tracking charging operation mode, the sensor driver 200C may sequentially output the first signal SG1 and the second signal SG2 to an area overlapping with the point where the pen PN is sensed, rather than to the whole sensor layer 200.

In the charging operation mode, the sensor driver 200C may provide the first signal SG1 to one of the third electrodes 230, a first end of the first loop trace line 230rt1, or a second end of the first loop trace line 230rt1, and may provide the second signal SG2 to another one of the third electrodes 230, the first end of the first loop trace line 230rt1, or the second end of the first loop trace line 230rt1. For example, in the charging operation mode the sensor driver 200C may apply the first signal SG1 to one of the second line portion 232t, the second loop trace lines 230rt2, or the third line portion 233t, and may apply the second signal SG2 to another one of the second line portion 232t, the second loop trace lines 230rt2, or the third line portion 233t. According to an embodiment of the present disclosure, in the charging operation mode, the sensor driver 200C may provide the first signal SG1 to at least one of the third electrodes 230, and may provide the second signal SG2 to at least one other third electrode 230 of the third electrodes 230. The second signal SG2 may be an inverse signal of the first signal SG1. For example, the first signal SG1 may be a sinusoidal signal.

Because the first signal SG1 and the second signal SG2 are applied to at least two pads PD, a current may have a current path to flow through one pad PD to another pad PD. In addition, because the first signal SG1 and the second signal SG2 may be sinusoidal signals having an inverse phase relationship with each other, the direction of the current may be periodically varied. In an embodiment of the present disclosure, the first signal SG1 and the second signal SG2 may be square-wave signals having an inverse phase relationship with each other.

When the first signal SG1 and the second signal SG2 have an inverse phase relationship with each other, a noise caused in the display layer 100 (e.g., refer to FIG. 6) by the first signal SG1 may be canceled out by a noise caused by the second signal SG2. Accordingly, a flicker phenomenon may not occur in the display layer 100, and the display quality of the display layer 100 may be improved.

In an embodiment of the present disclosure, the first signal SG1 may be a sinusoidal signal. However, the present disclosure is not limited thereto, and the first signal SG1 may be a square-wave signal. The second signal SG2 may have a constant voltage (e.g., a predetermined constant voltage). For example, the second signal SG2 may be a ground voltage. In other words, a pad PD to which the second signal SG2 is applied may be regarded as being grounded. Even in this case, the current may flow from one pad PD to another pad PD. In addition, even though the other pad PD is grounded, the direction of the current may be periodically varied because the first signal SG1 is a sinusoidal signal or a square-wave signal.

According to an embodiment of the present disclosure, a current path having a loop coil pattern may be implemented by the components included in the sensor layer 200. Accordingly, the electronic device 1000 (e.g., refer to FIG. 3A) may charge the pen PN using the sensor layer 200. Thus, a component having a coil for charging the pen PN (e.g., a digitizer or the like) may not need to be separately added, so that an increase in the thickness and the weight of the electronic device 1000 and a decrease in the flexibility of the electronic device 1000 due to the addition of the component may not occur.

In the charging operation mode, the first electrodes 210, the second electrodes 220, and the fourth electrodes 240 may be grounded or electrically floated, or may receive a constant voltage. In more detail, the first electrodes 210, the second electrodes 220, and the fourth electrodes 240 may be floated. In this case, the current may not flow to the first electrodes 210, the second electrodes 220, and the fourth electrodes 240.

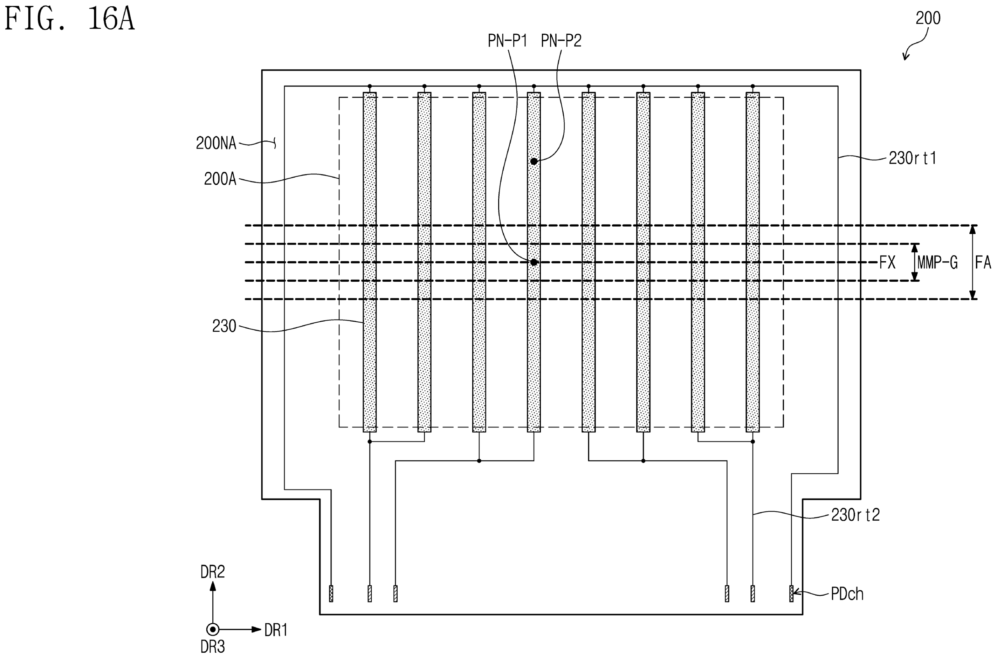

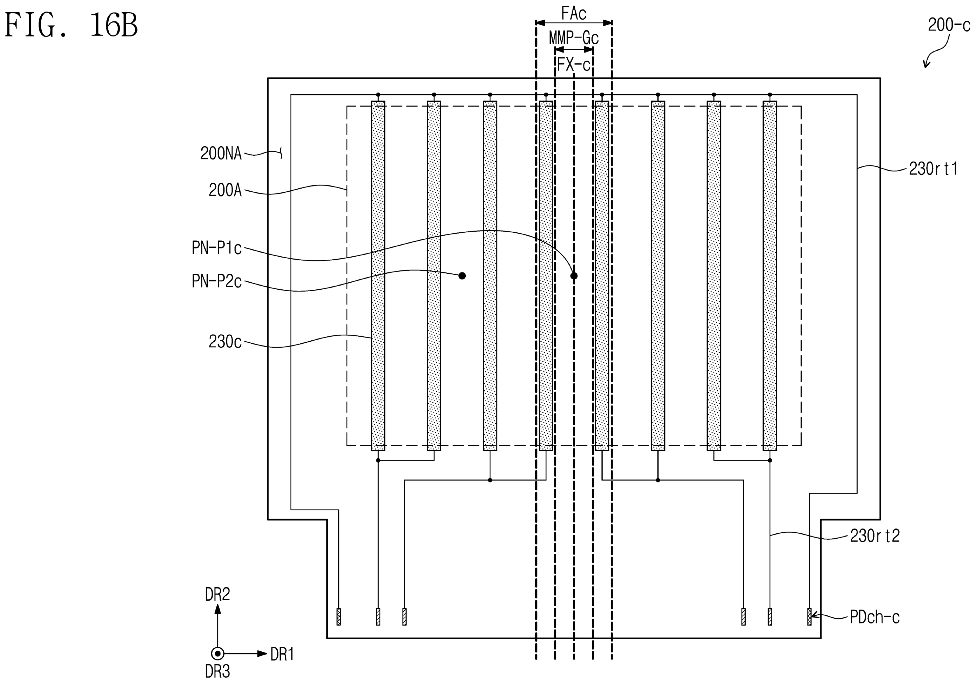

FIG. 16A is a plan view illustrating some components of the sensor layer 200 according to an embodiment of the present disclosure. FIG. 16B is a plan view illustrating some components of a sensor layer 200-c according to a comparative example.

Referring to FIG. 16A, the third electrodes 230 of the sensor layer 200 may be arranged along the first direction DR1, and each of the third electrodes 230 extends in the second direction DR2. The folding axis FX extends in the first direction DR1 that is the same direction as the arrangement direction of the third electrodes 230. Accordingly, the third electrodes 230 may all overlap with the folding area FA and the gap MMP-G.

The second loop trace lines 230rt2 may be connected between pads PDch and the third electrodes 230. For example, the second loop trace lines 230rt2 may protrude and extend from the pads PDch in the second direction DR2. The second loop trace lines 230rt2 extend from the sensing area 200A toward the pads PDch that are spaced apart from one another along the first direction DR1.

The plurality of pads PDch electrically connected with the third electrodes 230 may also be arranged along the first direction DR1. The arrangement direction of the pads PDch and the arrangement direction of the third electrodes 230 may be parallel to or substantially parallel to each other. Accordingly, a design path of the second loop trace lines 230rt2 may be simplified, and thus, a possibility that the magnetic field generated using the third electrodes 230 will be offset may be further reduced.

Referring to FIGS. 4A, 6, and 16A, the magnetic field generated by the third electrodes 230 and the first loop trace line 230rt1 may be induced in a direction from the display layer 100 toward the sensor layer 200 by the first magnetic field induction layer MMP1 and the second magnetic field induction layer MMP2.

Referring to FIG. 16B, third electrodes 230c of the sensor layer 200-c may be arranged along the first direction DR1, and each of the third electrodes 230c extends in the second direction DR2. In addition, a plurality of pads PDch-c electrically connected with the third electrodes 230c may also be arranged along the first direction DR1. A folding axis FX-c extends in the second direction DR2 that is the same direction as the extension direction of the third electrodes 230c. Accordingly, some of the third electrodes 230c may overlap with a folding area FAc, and other third electrodes 230c may not overlap with the folding area FAc.

Referring to FIGS. 4A and 16B, some of the third electrodes 230c may overlap with a gap MMP-Gc, or may be disposed adjacent to the gap MMP-Gc. Other third electrodes 230c may be disposed relatively farther away from the gap MMP-Gc. In this case, depending on the location of a generated current path, there may be a larger deviation or variation in a degree to which the magnetic flux is attenuated. For example, during a charging operation including a specific electrode, the magnetic flux may be relatively more attenuated in an area adjacent to (e.g., closer to) the folding area FAc. The specific electrode may mean an electrode that overlaps with the gap MMP-Gc, or is disposed adjacent to (e.g., closer to) the gap MMP-Gc. Accordingly, a charging performance may be degraded in an area overlapping with the folding area FAc, which may cause a non-uniform charging performance of the sensor layer 200-c.

However, referring to FIG. 16A, according to an embodiment of the present disclosure, a portion of each of all of the third electrodes 230 overlaps with the gap MMP-G. Accordingly, a deviation or variation in a magnetic flux attenuation depending on the location of a current path may be reduced or removed. In other words, even though there may be a difference in the degree of the magnetic flux attenuation between the area where the gap MMP-G is defined and the area where the gap MMP-G is not defined, a charging performance may be relatively uniform, because all of the third electrodes 230 overlap with the gap MMP-G. As the charging performance using the third electrodes 230 is uniform, the pen sensing performance of the electronic device 1000 may be improved.

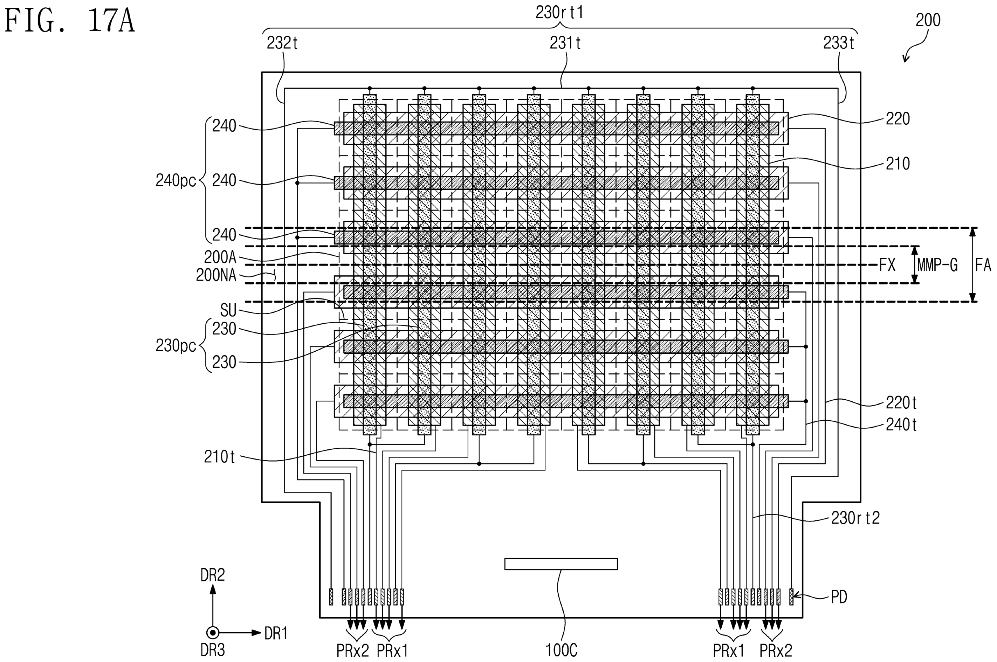

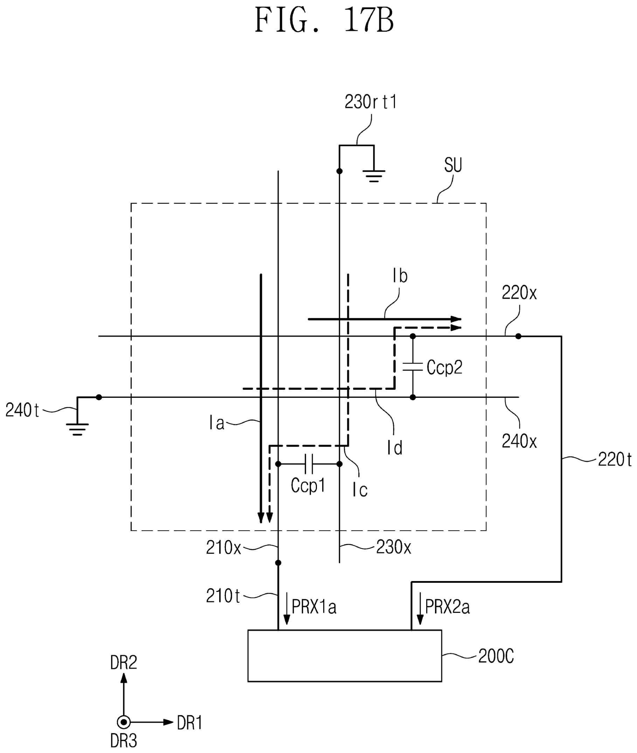

FIG. 17A is a schematic view illustrating the second mode according to an embodiment of the present disclosure. FIG. 17B is a schematic view illustrating the second mode based on one sensing unit SU according to an embodiment of the present disclosure.

Referring to FIGS. 17A and 17B, the second mode may include a charging operation mode and a pen sensing operation mode. FIGS. 17A and 17B are views illustrating the pen sensing operation mode.

Referring to FIG. 17A, in the pen sensing operation mode, first reception signals PRX1 may be output from the first electrodes 210, and second reception signals PRX2 may be output from the second electrodes 220. In FIG. 17B, one sensing unit SU is illustrated through which first to fourth induced currents Ia, Ib, Ic, and Id generated by the pen PN (e.g., refer to FIG. 6) flow.

Referring to FIGS. 17A and 17B, in an embodiment of the present disclosure, routing directions of one electrode and another electrode of the sensor layer 200 that overlap with each other may be different from each other. For example, the routing direction of a first electrode 210x and the routing direction of a third electrode 230x may be different from each other. In addition, the routing direction of a second electrode 220x and the routing direction of a fourth electrode 240x may be different from each other. For example, in FIG. 17B, the first electrode 210x and the first trace line 210t may be connected with each other on the lower side of the sensing unit SU, and the third electrode 230x and the first loop trace line 230rt1 may be connected with each other on the upper side of the sensing unit SU. The second electrode 220x and the second trace line 220t may be connected with each other on the right side of the sensing unit SU, and the fourth electrode 240x and the auxiliary trace line 240t may be connected with each other on the left side of the sensing unit SU.

The LC resonance circuit of the pen PN may emit a magnetic field having a resonant frequency while discharging charged charges. Due to the magnetic field provided by the pen PN, the first induced current Ia may be generated in the first electrode 210x, and the second induced current Ib may be generated in the second electrode 220x. In addition, the third induced current Ic may be generated in the third electrode 230x, and the fourth induced current Id may be generated in the fourth electrode 240x.

A first coupling capacitor Ccp1 may be formed between the third electrode 230x and the first electrode 210x, and a second coupling capacitor Ccp2 may be formed between the fourth electrode 240x and the second electrode 220x. The third induced current Ic may be transferred to the first electrode 210x through the first coupling capacitor Ccp1, and the fourth induced current Id may be transferred to the second electrode 220x through the second coupling capacitor Ccp2.

The sensor driver 200C may receive a first reception signal PRX1a based on the first induced current Ia and the third induced current Ic from the first electrode 210x, and may receive a second reception signal PRX2a based on the second induced current Ib and the fourth induced current Id from the second electrode 220x. The sensor driver 200C may detect the input coordinates of the pen PN, based on the first reception signal PRX1a and the second reception signal PRX2a.

The sensor driver 200C may receive the first reception signal PRX1a from the first electrode 210x, and may receive the second reception signal PRX2a from the second electrode 220x. In this case, first ends of the third electrode 230x and the fourth electrode 240x may all be floated. Accordingly, a compensation for a sensing signal may be maximized by the coupling between the first electrode 210x and the third electrode 230x and the coupling between the second electrode 220x and the fourth electrode 240x.

In addition, second ends of the third electrode 230x and the fourth electrode 240x may be grounded or floated. Accordingly, the third induced current Ic and the fourth induced current Id may be sufficiently transferred to the first electrode 210x and the second electrode 220x by the coupling between the first electrode 210x and the third electrode 230x and the coupling between the second electrode 220x and the fourth electrode 240x, respectively.

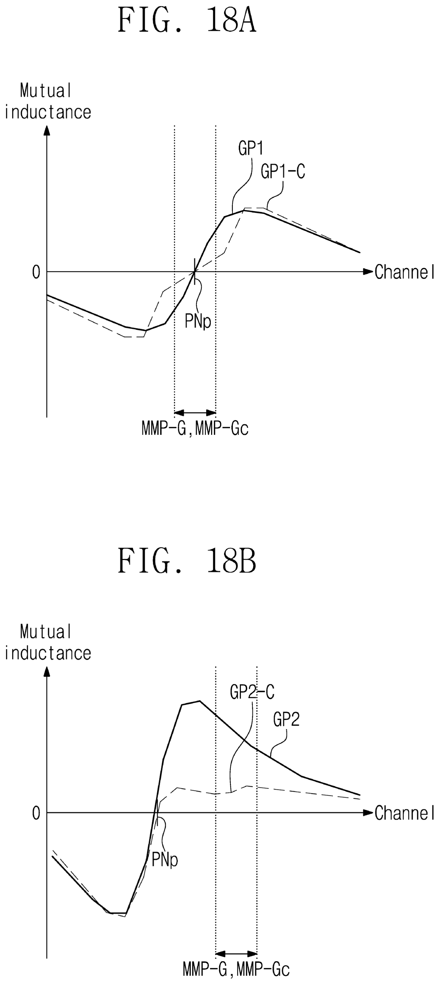

FIG. 18A illustrates graphs depicting mutual inductances for respective channels when a pen is located in an area overlapping with the gaps MMP-G and MMP-Gc.

Referring to FIGS. 16A, 16B, and 18A, a first graph GP1 depicts a mutual inductance between the pen and the sensor layer 200 when the pen is located at a first point PN-P1 of FIG. 16A. A second graph GP1-C depicts mutual inductance between the pen and the sensor layer 200-c when the pen is located at a first comparison point PN-P1c of FIG. 16B.

The first point PN-P1 may be a point overlapping with the gap MMP-G, and the first comparison point PN-P1c may be a point overlapping with the gap MMP-Gc. The position PNp of the pen and the positions of the gaps MMP-G and MMP-Gc are illustrated on the X-axis of FIG. 18A.

It can be seen that when the first graph GP1 according to an embodiment of the present disclosure is compared with the second graph GP1-C according to the comparative example, the mutual inductance in the first graph GP1 is not degraded. The absolute value of a mutual inductance may be proportional to an induced voltage. Accordingly, when the induced voltage is increased, an induced current generated in the sensor layer 200 may also be increased correspondingly. As a result, the sensing sensitivity of the sensor layer 200 may be improved.

FIG. 18B illustrates graphs depicting mutual inductances for respective channels when a pen is located in an area not overlapping with the gaps MMP-G and MMP-Gc.

Referring to FIGS. 16A, 16B, and 18B, a first graph GP2 depicts a mutual inductance between the pen and the sensor layer 200 when the pen is located at a second point PN-P2 of FIG. 16A. A second graph GP2-C depicts a mutual inductance between the pen and the sensor layer 200-c when the pen is located at a second comparison point PN-P2c of FIG. 16B.

The second point PN-P2 may be a point not overlapping with the gap MMP-G, and the second comparison point PN-P2c may be a point not overlapping with the gap MMP-Gc. The position PNp of the pen and the positions of the gaps MMP-G and MMP-Gc are illustrated on the X-axis of FIG. 18B.

Referring to the second graph GP2-C, it can be seen that the maximum value of the mutual inductance is decreased when compared to that in the first graph GP2, and the mutual inductance is degraded even in the area overlapping with the gap MMP-Gc. It can be seen that when the first graph GP2 according to an embodiment of the present disclosure is compared with the second graph GP2-C according to the comparative example, the mutual inductance in the first graph GP2 is not degraded.

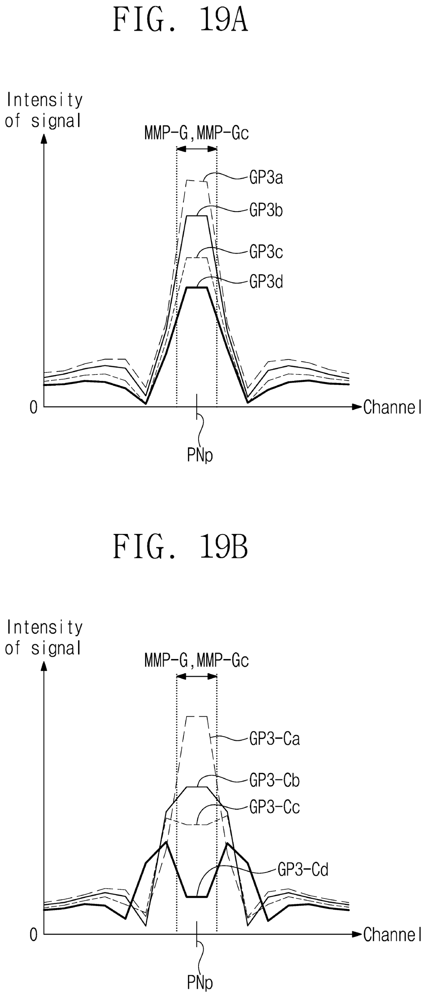

FIG. 19A illustrates graphs depicting intensities of signals sensed by a sensor layer 200 when a pen is located in an area overlapping with the gaps MMP-G and MMP-Gc according to an embodiment of the present disclosure. FIG. 19B illustrates graphs depicting intensities of signals sensed by a sensor layer 200 when a pen is located in an area overlapping with the gaps MMP-G and MMP-Gc according to a comparative example. The position PNp of the pen and the positions of the gaps MMP-G and MMP-Gc are illustrated on the X-axes of FIGS. 19A and 19B.

Referring to FIGS. 16A and 19A, first to fourth graphs GP3a, GP3b, GP3c, and GP3d depict the intensities of differential signals obtained from the sensor layer 200 when the pen is located at the first point PN-P1 of FIG. 16A. For example, the first to fourth graphs GP3a, GP3b, GP3c, and GP3d are graphs representing the absolute values of differential signals differentially sensed from an n-th electrode and an (n+2)th electrode, where n is an integer greater than or equal to 1.

Referring to FIGS. 16B and 19B, fifth to eighth graphs GP3-Ca, GP3-Cb, GP3-Cc, and GP3-Cd depict the intensities of differential signals obtained from the sensor layer 200-c when the pen is located at the first comparison point PN-P1c of FIG. 16B. For example, the fifth to eighth graphs GP3-Ca, GP3-Cb, GP3-Cc, and GP3-Cd are graphs representing the absolute values of differential signals differentially sensed from an n-th electrode and an (n+2)th electrode, where n is an integer greater than or equal to 1.

The first graph GP3a and the fifth graph GP3-Ca represent the intensities of signals when the gaps MMP-G and MMP-Gc are 1 mm. The second graph GP3b and the sixth graph GP3-Cb represent the intensities of signals when the gaps MMP-G and MMP-Gc are 5 mm. The third graph GP3c and the seventh graph GP3-Cc represent the intensities of signals when the gaps MMP-G and MMP-Gc are 9 mm. The fourth graph GP3d and the eighth graph GP3-Cd represent the intensities of signals when the gaps MMP-G and MMP-Gc are 12 mm.

Referring to FIG. 19A, according to an embodiment of the present disclosure, even though the gap MMP-G is increased, only the peak value of the signal intensity is decreased, and there is no significant change in the shape of the waveform of the signal intensity. However, referring to FIG. 19B, according to the comparative example, it can be seen that as the gap MMP-Gc is increased, the peak value of the signal intensity is decreased, and the shape of the waveform is also changed.

According to an embodiment of the present disclosure, a distortion of an analog signal may be decreased when compared to that in the comparative example. Accordingly, an algorithm for processing an analog signal may be relatively simplified, and a signal processing speed may be improved. As a result, a response speed of the electronic device 1000 to an input may also be improved.

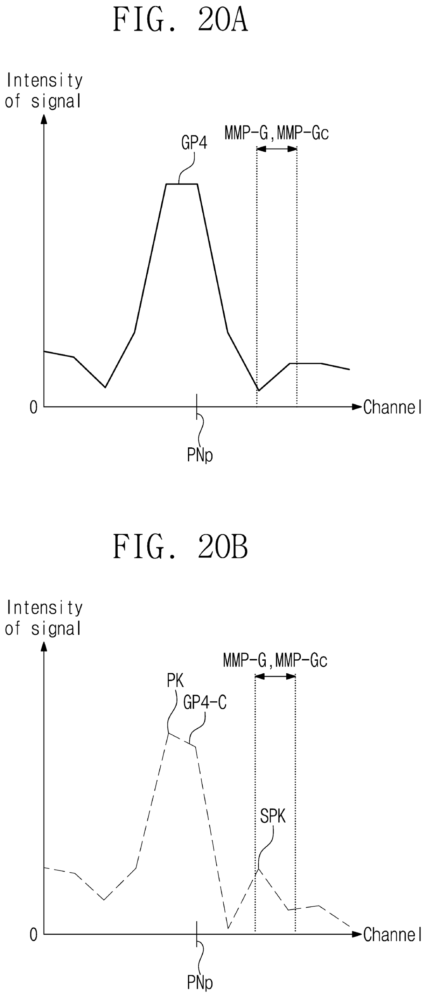

FIG. 20A illustrates a graph depicting an intensity of a signal sensed by a sensor layer 200 when a pen is located in an area not overlapping with the gaps MMP-G and MMP-Gc (e.g., at the second point PN-P2c) according to an embodiment of the present disclosure. FIG. 20B illustrates a graph depicting an intensity of a signal sensed by a sensor layer when a pen is located in an area not overlapping with a gap (e.g., at the second comparison point) according to a comparative example. The position PNp of the pen and the positions of the gaps MMP-G and MMP-Gc are illustrated on the X-axes of FIGS. 20A and 20B.

Referring to FIGS. 16A and 20A, a first graph GP4 depicts the intensity of a differential signal obtained from the sensor layer 200 when the pen is located at the second point PN-P2 of FIG. 16A. Referring to FIGS. 16B and 20B, a second graph GP4-C depicts the intensity of a differential signal obtained from the sensor layer 200-c when the pen is located at the second comparison point PN-P2c of FIG. 16B. For example, the first graph GP4 and the second graph GP4-C are graphs representing the absolute values of differential signals differentially sensed from the n-th electrode and the (n+2)th electrode.

Referring to the second graph GP4-C, a sub-peak SPK may be additionally sensed in addition to a peak PK in an area overlapping with or adjacent to where the pen is located. The sub-peak SPK may occur in an area overlapping with or adjacent to the gap MMP-G. This may cause an error in which the pen is detected as being tilted even though the pen is not tilted. However, according to an embodiment of the present disclosure, it can be seen that a signal distortion does not occur in the area overlapping with the gap MMP-G. Accordingly, the extension direction of each of the third electrodes 230 and the extension direction of the gap MMP-G may be designed so as not to be aligned with each other, and thus, the pen sensing performance and the pen sensing accuracy of the electronic device 1000 may be improved.

As described above, the arrangement direction of the third electrodes (e.g., referred to as the charging electrodes) may cross the separation direction of the first magnetic field induction layer and the second magnetic field induction layer. Portions of all of the third electrodes may overlap with the gap between the first magnetic field induction layer and the second magnetic field induction layer. Even though a sensitivity deviation or variation occurs between the area where the gap is defined and the area where the gap is not defined, a deviation or variation in a charging performance and a deviation or variation in a pen sensitivity may be reduced when the gap overlaps with portions of all of the third electrodes rather than overlapping with only some of the third electrodes. Accordingly, a charging performance using the third electrodes may be uniform, and thus, a pen sensing performance of the electronic device may be improved.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. An electronic device (1000) comprising:
a display layer (100) configured to display an image;
a sensor layer (200) on the display layer (100);
a first magnetic field induction layer (MMP1) under the display layer (100); and
a second magnetic field induction layer (MMP2) under the display layer (100), and spaced from the first magnetic field induction layer (MMP1),
wherein the sensor layer (200) comprises:
a plurality of first electrodes (210) along a first direction (DR1);
a plurality of second electrodes (220) along a second direction (DR2) crossing the first direction (DR1);
a plurality of third electrodes (230) along the first direction (DR1); and
a loop trace line (230rt1) electrically connected with all of the plurality of third electrodes (230), and
wherein the first magnetic field induction layer (MMP1) and the second magnetic field induction layer (MMP2) are spaced from each other in the second direction (DR2).

2. The electronic device (1000) of claim 1, wherein a gap (MMP-G) extending in the first direction (DR1) is located between the first magnetic field induction layer (MMP1) and the second magnetic field induction layer (MMP2), and a portion of each of the plurality of third electrodes (230) overlaps with the gap (MMP-G).

3. The electronic device (1000) of claim 1 or claim 2, wherein the display layer (100) and the sensor layer (200) are configured to be folded and unfolded about a folding axis (FX) extending in the first direction (DR1).

4. The electronic device (1000) of claim 3, wherein a folding area (FA) overlapping with the folding axis (FX) and configured to be folded and unfolded is defined in the display layer (100) and the sensor layer (200), and
wherein the first magnetic field induction layer (MMP1) and the second magnetic field induction layer (MMP2) are spaced from each other in the folding area (FA).

5. The electronic device (1000) of claim 4, wherein a width of the folding area (FA) in the second direction (DR2) is smaller than a width of the folding area in the first direction (DR1).

6. The electronic device (1000) of claim 4 or claim 5, wherein a portion of each of the plurality of third electrodes (230) overlaps with the folding area (FA).

7. The electronic device (1000) of any preceding claim, wherein the sensor layer (200) further comprises a plurality of pads (PDch) electrically connected with the plurality of third electrodes (230), and
wherein the plurality of pads (PDch) are located along the first direction (DR1).

8. The electronic device (1000) of claim 7, wherein the sensor layer (200) further comprises a plurality of trace lines (230rt2) electrically connected with the plurality of pads (PDch) and the plurality of third electrodes (230), and
wherein the plurality of trace lines (230rt2) protrude and extend from the plurality of pads (PDch) in the second direction (DR2).

9. The electronic device (1000) of any preceding claim, further comprising:
a sensor driver (200C) configured to drive the sensor layer (200),
wherein, in a charging operation mode, the sensor driver (200C) is configured to provide a first signal (SG1) to one of a first end of the loop trace line (230rt1), a second end of the loop trace line (230rt1), or the plurality of third electrodes (230), and provide a second signal (SG2) to another one of the first end of the loop trace line (230rt1), the second end of the loop trace line (230rt1), or the plurality of third electrodes (230).

10. The electronic device (1000) of any preceding claim, wherein the plurality of third electrodes (230) and the loop trace line (230rt1) are configured to generate a magnetic field that is induced in a direction from the display layer (100) toward the sensor layer (200) by the first magnetic field induction layer (MMP1) and the second magnetic field induction layer (MMP2).

11. The electronic device (1000) of any preceding claim, further comprising:
a first lower sheet (CUS1) under the first magnetic field induction layer (MMP1); and
a second lower sheet (CUS2) under the second magnetic field induction layer (MMP2).

12. The electronic device (1000) of claim 11, wherein a magnetic permeability of each of the first magnetic field induction layer (MMP1) and the second magnetic field induction layer (MMP2) is higher than a magnetic permeability of each of the first lower sheet (CUS1) and the second lower sheet (CUS2).
